# EUROPÄISCHE PATENTSCHRIFT

(11) **EP 2 269 028 B1**
(45) Veröffentlichungstag und Bekanntmachung des Hinweises auf die Patenterteilung: **10.06.2015**
(21) Anmeldenummer: 09732904.9
(22) Anmeldetag: 14.04.2009
(51) Int. Cl.: G01N 1/31, G01N 35/10

(54) **Dosierkopf**
Dispensing head
Tête d'application

(30) Priorität: 14.04.2008 DE 102008018982
(43) Veröffentlichungstag der Anmeldung: 05.01.2011
(73) Patentinhaber: Merz, Hartmut, 23627 Gross Grönau (DE); Van Der Wolk, Kay, 23554 Lübeck (DE)
(72) Erfinder: Merz, Hartmut, 23627 Gross Grönau (DE); Van Der Wolk, Kay, 23554 Lübeck (DE)
(74) Vertreter: Grosse, Felix Christopher
(86) Internationale Anmeldenummer: PCT/EP2009/002729
(87) Internationale Veröffentlichungsnummer: WO 2009/127394

(56) Entgegenhaltungen:
- WO-A-99/63324
- WO-A-03/047737
- WO-A-2007/134814
- US-A- 4 844 868
- US-A- 5 173 741
- US-A1- 2002 110 488
- US-A1- 2005 053 526
- US-A1- 2006 153 736
- US-A1- 2006 269 447
- US-B1- 6 495 106

## Beschreibung

### Gebiet der Erfindung

Die vorliegende Erfindung betrifft eine automatische Vorrichtung zur Dosierung von Reagenzien auf Objektträgern, wobei die Objektträger jeweils eine Vielzahl von voneinander abgegrenzten Vertiefungen enthalten, die zur Aufnahme von Zell- oder Gewebeproben geeignet sind. Die Vorrichtung enthält einen positionierbaren Dosierkopf zur Aufbringung von geeigneten flüssigen Reagenzien in die Vertiefungen der Objektträger. Die Erfindung betrifft weiterhin einen abnehmbaren Dosierkopf, der in die Vorrichtung eingesetzt werden kann, und ein Verfahren zur automatischen Dosierung von Reagenzien in die voneinander abgegrenzten Vertiefungen von Objektträgern.

### Stand der Technik

In der jüngeren Vergangenheit ist durch die Verbesserung immunhistochemischer und molekularbiologischer Analyseverfahren ein erhöhter Bedarf an Gewebeuntersuchungen entstanden. Insbesondere wird im Rahmen der Onkologie bei der Diagnose und Behandlung von Krebserkrankungen vermehrt auf die Genexpressionsanalyse gesetzt.

Dabei werden Gewebeproben direkt oder indirekt oder mittels tumorspezifischer Chips daraufhin untersucht, ob bestimmte Gene ein- oder ausgeschaltet sind bzw. ob Genveränderungen (z.B. Mutationen) vorhanden sind. Dabei können Gewebe- oder Zellproben mit Antikörpern bzw. DNA- oder RNA-Sonden behandelt werden, die dann über Färbeverfahren zu einem spezifischen Nachweis der Gene, Genprodukte (mRNA oder Antigene) führen. Eine immunhistochemische Standard-Färbemethode ist z.B. die sogenannte Avidin-Biotin-Complex (ABC) Methode, die in Hsu, S.M. et al., J. Histochem. Cytochem, 29, 577 - 580 beschrieben ist. Im ersten Schritt dieser Methode bindet der Primär-Antikörper an das entsprechende Gewebe-Antigen. Nach einem oder mehreren Waschschritten erfolgt die Bindung eines biotinylierten Sekundär-Antikörpers an den primären Antikörper. Im Anschluss an einen oder mehrere weitere Waschschritte wird ein vorgeformter Avidin-Biotin-Enzym-Komplex aufgebracht, der sich hochaffin an das Biotin-Molekükl des Sekundär-Antikörpers anlagert. Es folgen erneut ein oder mehrere Waschschritte, und dann wird ein Chromogen aufgebracht, das in einer Färbereaktion mit dem Avidin-Biotin-Enzym-Komplex unter Bildung eines sichtbaren, gefärbten Reaktionsproduktes reagiert. Molekularbiologische Verfahren umfassen die In-situ-Hybridisierung (ISH) und die Fluoreszenz-in-situ-Hybridisierung (FISH), bei denen Nukleinsäure, also RNA oder DNA, z.B. in Geweben oder einzelnen Zellen nachgewiesen werden. Dazu werden künstlich hergestellte Sonden aus einer Nukleinsäure eingesetzt, die über Basenpaare and die nachzuweisende Nukleinsäure hybridisieren. Bei der FISH-Methode wird die Sonde mit Hilfe eines fluoreszierenden Farbstoffes nachgewiesen.

Bei Genexpressionsanalysen wird die Tatsache ausgenutzt, dass von den etwa 25.000 bis 30.000 Genen einer Zelle Tausende oder auch alle gleichzeitig analysiert werden. Man nimmt an, dass von den ca. 25.000 Genen nur etwa die Hälfte gleichzeitig in einer Zelle aktiv ist und dass davon nur einige Hundert Gene einer Zelle tumor- oder krankheitsspezifisch bzw. relevant sind. So lassen sich beispielsweise mit ca. 200 Genen Mantelzellenlymphome von allen anderen Lymphomen (ca. 40 unterschiedliche Entitäten sind bekannt, die sich wiederum in zahlreiche Untergruppen gruppieren lassen) spezifisch unterscheiden. Mit einer vergleichbaren Anzahl von durchaus anderen Genen lassen sich beispielsweise Mantelzellenlymphome von allen anderen Tumoren abtrennen. Und ebenso gelingt mit einer Anzahl von einigen hundert Genen die Unterscheidung von reaktiven Lymphozyten und neoplastischen Lymphozyten eines Mantelzellenlymphoms.

Durch statistische Analysen solcher globaler Expressionsanalysen gelingt häufig eine signifikante Datenreduktion, und es werden sogenannte genetische Fingerabdrücke z.B. von Tumoren oder Krankheitsprozessen erzeugt, die sich dann im Weiteren als diagnostische Marker verwenden lassen. Dabei wird in der Regel keine signifikante Verschlechterung der Aussagekraft der Analysen beobachtet. So können z.B. von etwa 30 Genen, die für hochmaligne B-Zellen Lymphome bedeutsam sind, je drei Gene ausgewählt werden, die am stärksten mit einer guten bzw. die am stärksten mit einer schlechten Prognose korrelieren. Bringt man nun diese sechs Gene mit einem positiven bzw. negativen Faktor in eine mathematische Prognoseformel ein, lässt sich damit eine sehr gute statistische Aussage zum Überleben des Patienten erzielen. Diese Vorhersage kann dann mit signifikantem Mehrwert für den Patienten in die klinischen therapeutischen Überlegungen integriert werden.

Da Gewebe und Zellen nach der Entnahme aus dem Organismus sehr schnell absterben und in dem Prozess der Nekrose zerfallen, wobei Organellen, Zellstrukturen und auch Gewebearchitektur zerstört werden können, werden Gewebeanalysen vor allem an sogenanntem FFPE-Gewebe (formalin fixed and paraffin embedded) durchgeführt. Für die Diagnostik an FFPE-Material stehen zur Zeit etwa 250 etablierte Antikörper zur Verfügung, wobei man zur Analyse häufig so genannte Algorithmen verwendet. Dabei werden Tumore zunächst konventionell morphologisch mit Standardfärbungen untersucht. Der Pathologe bzw. die Pathologin kommt dann zu einer Verdachtsdiagnose oder zu verschiedenen differentialdiagnostischen Überlegungen, bei denen zum Beispiel 3 oder 4 verschiedene Diagnosen berücksichtigt werden. Um zu einer endgültigen Diagnose zu kommen, wird dann eine variable Anzahl von immunhistochemischen oder molekularbiologischen Färbungsreaktionen durchgeführt. Um dies möglichst ökonomisch zu gestalten, färbt man mit so genannten algorithmischen Antikörper- Panels, d.h. sinnvoll zusammengestellten Gruppen von Antikörpern. Ein algorithmisches Antikörper- Panel kann z.B. vier bis sechs Antikörper beinhalten. Verschiedene Antikörper Panels können in einem logischen (z.B. hierarchischen) Verhältnis zueinander stehen oder auch für bestimmte Erkrankungen in Gruppen zusammengestellt werden. Der Pathologe bzw. die Pathologin bearbeitet die diagnostische Fragestellung von Panel zu Panel immer differenzierter, bis schließlich die Diagnose feststeht.

Damit ergibt sich, dass an dem Gewebematerial eines Patienten z.B. zwischen 10 und 50 Untersuchungen (z.B. im Rahmen so genannter tumorspezifischer Diagnose- oder Prognose- Panels) durchgeführt und ausgewertet werden müssen. Im Hinblick auf den Kostendruck im Gesundheitswesen müssen diese Untersuchungen möglichst zeit- und kosteneffektiv durchgeführt werden.

Zur Durchführung derartiger Gewebeanalysen sind automatische Färbevorrichtungen (auch als Stainer- Vorrichtungen bezeichnet) vorgeschlagen worden.

So wird in der US 6,495,106 eine automatische Färbevorrichtung beschrieben, die einen in drei Dimensionen beweglichen Arm hat, der einen mit einer Aussparung versehenen Kopf trägt. Dieser Kopf umfasst einen Reagenzien-Kopf mit einer Spitze, die zum Aufbringen der Reagenzien dient. Der Kopf umfasst weiter eine Waschspitze und eine Blasspitze, um die verschiedene Schritte einer typischen Nachweisreaktion durchführen zu können.

Eine ähnliche Vorrichtung wird auch in der US 5,948,359 beschrieben, wobei der Reagenzien-Kopf zum Aufbringen der Reagenzien mit Einmal-Pipettenspitzen versehen werden kann, die in einer entsprechenden Haltevorrichtung vorgehalten werden.

Diese Vorrichtungen sind zur Durchführung von Nachweisreaktionen an einer Vielzahl von Objektträgern, weiche jeweils eine Vielzahl von zur Aufnahme von Zell- oder Gewebeproben geeigneten Reaktionszonen aufweisen, weniger gut geeignet, da die Analyse insgesamt einen sehr langen Zeitraum beanspruchen würde, da nur eine Reagenzien-Spitze vorhanden ist. Weiterhin besteht aus diagnostischen Erwägungen ein hoher Bedarf daran, für einen bestimmten Patienten eine Vielzahl von Analysen an Gewebeproben ein und desselben Gewebes durchzuführen, um nach dem oben beschriebenen algorithmischen Verfahren eine Diagnose ermitteln und verifizieren zu können. Dazu müssen jedoch die Gewebeproben ein und desselben Patientenmaterials mit unterschiedlichen Antikörpern oder Sonden versetzt werden, um auf diese Weise den spezifischen Tumor bzw. das Krankheitsbild einkreisen und letztlich diagnostizieren zu können. Bei den in der US 6,495,106 und in der US 5,948,359 beschriebenen Vorrichtungen muss bei einem Wechsel des Nachweisreagenzes die Pipetten-Spitze der Reagenzien-Spitze gewechselt werden, was zum einen zu einem erhöhten Verbrauch an Pipetten-Wegwerfspitzen führt und zum anderen den Zeitbedarf der Gesamtanalyse - und damit letztendlich die Kosten für die Gesamtanalyse - nochmals erhöht.

Die US 2008/0,038,836 A offenbart eine für eine große Zahl von Objektträgern geeignete Färbevorrichtung, die eine Vielzahl von Arbeitsstationen aufweist, die senkrecht in einem Magazin angeordnet sind. Die Vorrichtung enthält weiterhin ein Tablett mit einer Vielzahl von Objektträgern, die horizontal in einer Ebene angeordnet sind und voneinander beabstandet sind. Dabei kann das Tablett mit Objektträgern von einem Transportsystem zwischen den einzelnen Arbeitsstationen bewegt und in die Arbeitsstationen hinein- und wieder herausbewegt werden. Die Vorrichtung beinhaltet z.B. eine oder mehrere Arbeitsstationen zum Trocknen oder Heizen, eine Arbeitsstation zum Entwachsen und Ent-Paraffinieren von FFPE-Gewebeproben und eine oder mehrere Färbe-Arbeitsstationen. Die Färbe-Arbeitsstation weist eine Reihe von Düsen auf, die mit Vorratsbehälter für Färbereagenzien bzw. Spülagenzien verbunden sind und zur Aufbringung dieser Reagenzien bzw. Agenzien auf die Objektträger dienen. Die in der US 2008/0,038,836 A beschriebene Vorrichtung ist sehr komplex, und der Transport des Tabletts mit Objektträgern zwischen den einzelnen Arbeitsstationen ist zeitaufwendig. Weiterhin ist eine begrenzte Zahl von z.B. zwei Düsen vorhanden, die bei Verwendung anderer Reagenzien gewechselt werden müssen. Die Reagenzien werden aus Vorratsbehältern über Schlauchleitungen in die Düsen gepumpt, was die Handhabung des X-Y-Z-Positioniersystems erschwert.

Die US 2006/0,269,447 offenbart einen Roboter für die Aufbringung von Flüssigkeiten auf Microtiter-Platten, die z.B. als ELISA-Platten (enzyme-linked immunosorbent assay) verwendet werden. Die Platten weisen z.B. 96 oder 384 Mikrovertiefungen auf. Der Roboter umfasst einen Pipettierkopf, der an einem Positionierungssystem befestigt ist. Der Pipettierkopf nimmt an einer Parkstation ein Tablett mit Pipettenspitzen auf und fährt dieses dann mit Hilfe der Positionierungsvorrichtung zur Mikrotiter-Platte, wo die Reagenzien in die Mikrovertiefungen der Platte eindosiert werden. Die Pipettenspitzen, die ein Volumen von 50 bis 250 µl aufweisen, können nach der Flüssigkeitsdosierung abgeworfen werden. Der Pipettierkopf fährt dann zur Parkstation und übernimmt ein neues Tablett mit Pipettenspitzen. Ähnliche Vorrichtungen sind in der DE 100 40 849 und in der US 2004/0,097,010 offenbart.

Ferner offenbart die US 5,173,741 A einen Dosierkopf zur Verwendung in einer automatischen Färbevorrichtung für Reihenuntersuchungen im Gesundheitswesen zur Dosierung von Reagenzien auf einer Vielzahl von Objektträgern gemäß dem Oberbegriff von Anspruch 1.

Derartige aus dem Stand der Technik bekannte Vorrichtungen sind nicht zur Durchführung von Nachweisreaktionen an einer Vielzahl von auf Objektträgern angeordneten Zell- oder Gewebeproben geeignet. Die Neubeladung des Tabletts mit Pipetten-Spitzen nach jedem einzelnen Dosiervorgang über einer einzelnen Mikrotiter-Platte ist extrem zeitaufwendig. Bei der Neubeladung werden die Pipetten-Spitzen abgeworfen und durch neue ersetzt, wodurch die Kosten des Verfahrens deutlich erhöht werden.

In Anbetracht des vorgenannten Standes der Technik besteht eine Aufgabe der vorliegenden Erfindung in der Bereitstellung einer automatischen Vorrichtung zur Dosierung von Reagenzien auf eine Vielzahl von Objektträgern, wobei oben beschriebenen Nachteile vollständig bzw. weitestgehend möglich beseitigt werden sollen. Der vorliegenden Erfindung liegt weiterhin die Aufgabe zu Grunde, eine Vorrichtung zur Dosierung von Reagenzien auf Objektträger bereitzustellen, mit der Nachweisreaktionen an einer Vielzahlzahl von Gewebeproben, die sich auf einer Vielzahl von Objektträgern befinden, effektiv und zeitsparend durchgeführt werden können, um den erhöhten Bedarf an immunhistochemischen und molekularbiologischen Untersuchungen an Zellen und Geweben im Gesundheitssystem Ressourcen-schonend bewältigen zu können. Weitere Aufgaben der vorliegenden Erfindung ergeben sich für den Fachmann unmittelbar aus der nachfolgenden Beschreibung der Erfindung.

Kurze Beschreibung der Erfindung

Die vorliegende Erfindung betrifft einen Dosierkopf zur Verwendung in einer automatischen Färbe-Vorrichtung für Reihenuntersuchungen im Gesundheitswesen zur Dosierung von Reagenzien auf eine Vielzahl von Objektträgern, umfassend eine Vielzahl von Vorratsbehältern, welche zur Aufnahme von flüssigen Reagenzien geeignet sind und an einem Ende ein Dosierventil zur Dosierung und Aufbringung der Reagenzien auf die Objektträger aufweisen, und welche an dem den Dosierventilen gegenüberliegenden Ende eine gasdichte Abdeckung aufweisen, wobei die Abdeckung einen mit Einlassventilen versehenen Anschluss zur Anlegung eines Gasüberdrucks aufweist, wobei das mittlere Volumen der Vorratsbehälter mindestens 2,5 ml ist und der Dosierkopf aus wechselbaren Platten oder Blöcken aufgebaut ist, wobei die Abdeckungen, Vorratsbehälter und/ oder Dosierventile jeweils einen zu einer Einheit zusammengefassten Block bilden.

Die vorliegende Erfindung betrifft des Weiteren eine automatische Färbe-Vorrichtung für Reihenuntersuchungen im Gesundheitswesen zur Dosierung von Reagenzien auf eine Vielzahl von Objektträgern, umfassend Haltevorrichtungen für eine Vielzahl von Objektträgern, welche jeweils eine Vielzahl von voneinander abgegrenzten Vertiefungen aufweisen, die zur Aufnahme von Zell- oder Gewebeproben geeignet sind, einen erfindungsgemäßen Dosierkopf sowie eine Positionierungsvorrichtung zur Positionierung der Vorratsbehälter des Dosierkopfes über den jeweiligen Reaktionszonen der Objektträger.

Die vorliegende Erfindung betrifft weiterhin ein Verfahren zur Dosierung von Reagenzien auf einer Vielzahl von Objektträgern mit Hilfe einer erfindungsgemäßen automatischen Färbe-Vorrichtung für Reihenuntersuchungen im Gesundheitswesen, worin
- die Objektträger in die Vorrichtung eingesetzt werden,
- die Vorratsbehälter, die als zu einer Einheit zusammengefasster Block ausgebildet sind und an dem den Dosierventilen gegenüberliegenden Ende die gasdichte Abdeckung aufweisen, wobei die Abdeckung einen mit Einlassventilen versehenen Anschluss zur Anlegung eines Gasüberdrucks aufweist mit Reagenzien befüllt werden,
- der Dosierkopf mit Hilfe der Positionierungsvorrichtung einander benachbarter Vorratsbehälter über wenigstens drei benachbarten Vertiefungen des Objektträgers positioniert wird, und
- die Reagenzien in die Vertiefung eindosiert wird, wobei das Volumen des Reagenz kleiner ist als das Volumen der Vertiefung, wobei mindestens drei benachbarte Vertiefungen der Objektträger simultan von Vorratsbehältern mit Reagenzien beaufschlagt werden.

### Detaillierte Beschreibung der Erfindung

Die vorliegende Erfindung betrifft eine automatische Vorrichtung zur Dosierung von Reagenzien auf einer Vielzahl von Objektträgern, welche jeweils eine Vielzahl an voneinander abgegrenzten Vertiefungen aufweisen. Die Vertiefungen sind zur Aufnahme von Gewebe- oder Zellreaktionen geeignet, an denen dann durch die zudosierten Reagenzien insbesondere immunhistochemische oder molekurlarbiologische Nachweisreaktionen durchgeführt werden.

Vertiefungen, in welchen eine Gewebe- oder Zellprobe angeordnet sein kann, werden als Reaktionszonen bezeichnet. Der Begriff "Vielzahl" bedeutet im Rahmen dieser Erfindung mindestens drei, vorzugsweise mindestens sechs und insbesondere mindestens achtzehn.

Objektträger, die zur Verwendung in der vorliegenden Erfindung geeignet sind, umfassen z.B. eine vorzugsweise transparente, ebene Basisplatte, auf der ein z.B. gleichmäßiges Raster von Stegen angeordnet ist, um voneinander abgegrenzte Vertiefungen bereit zu stellen. Der Objektträger sollte aus einem homogenen, transparenten Material wie z.B. aus Glas oder Polyethylen, einer Teflonschicht oder einer Schicht aus einem anderen vorzugsweise hydrophoben Polymermaterial bestehen, in die die Vertiefungen eingelassen sind. Dabei können die Vertiefungen in eine ursprünglich homogen dicke Schicht z.B. durch Bohrungen oder Fräsungen eingebracht werden, oder die Objektträger können einstückig z.B. durch Spritzgussverfahren hergestellt werden. Der Objektträger kann aber auch eine vorzugsweise gleichmäßig dicke Basisschicht aufweisen, auf die rasterförmige Stege aufgebracht werden, in dem ein geeigneter hydrophober, polymerisierbarer Precursor eines Polymers z.B. durch ein Siebdruckverfahren aufgebracht und anschließend polymerisiert wird.

Die Objektträger weisen eine Vielzahl von z.B. 6, 18, 24, 72 oder auch mehr Vertiefungen auf. Die Querschnittsflächen der Vertiefungen können sowohl regelmäßig als auch unregelmäßig sein, wobei regelmäßige Querschnittsflächen wie z.B. Quadrate, Rechtecke oder Kreise bevorzugt sind. Die Aussparungstiefe der Vertiefungen kann gegebenenfalls über die Querschruttsfläche variieren, ist aber vorzugsweise konstant. Vorzugsweise weisen alle Vertiefungen eines Objektträgers die gleiche Form auf. Darüber hinaus können in der erfindungsgemäßen Vorrichtung auch Standart-Objektträger verwendet werden.

Das mittlere Volumen der Vertiefungen beträgt zwischen 5 und 500 µl. Insbesondere werden die Abmessungen der Querschnittsfläche und der Aussparungstiefe der Vertiefungen so gewählt, dass die Vertiefungen vorzugsweise ein Volumen zwischen 5 und 150 µl aufweisen.

Die Abmessungen einer Vertiefung mit quadratischem oder rechteckigem Querschnitt können z.B. vorzugsweise zwischen 3 bis 10 mm x 3 bis 10 mm betragen, und die Tiefe kann zwischen 0,1 und 2,0 mm variieren. Vorzugsweise weisen die Vertiefungen eine mittlere Tiefe von weniger als 2 mm und eine Querschnittsfläche von weniger als 100 mm² auf.

Die Vertiefungen auf den Objektträgern sind durch Stege voneinander umrandet und voneinander abgetrennt, die regelmäßig oder unregelmäßig geformt sein können und eine gleichmäßige oder ungleichmäßige Dicke aufweisen können. Die Stege bilden vorzugsweise ein regelmäßiges Rasterm bzw. Array, das z.B. bei Vertiefungen mit rechteckigem oder quadratischem Querschnitt vorzugsweise von im Wesentlichen senkrecht aufeinander stehenden Stegen gebildet wird. Insbesondere können die Vertiefungen in Streifen oder einer regelmäßigen Matrix angeordnet sein.

Die Abmessungen der Objektträger entsprechen vorzugsweise denen handelsüblicher Formate. Die Objektträgerabmessungen sind besonders bevorzugt etwa 26 mm x 75 mm. An einem der Enden des Objektträgers ist vorzugsweise ein Beschriftungs- oder Identifikationsfeld vorgesehen, das z.B. beschriftet werden oder mit ein- oder zweidimensionalen Code-Etiketten, RFID-Chips oder dgl. versehen werden kann.

Beispielsweise weist ein Objektträger 18 Vertiefungen auf. Die Vertiefungen sind in einer regelmäßigen Matrix aus 3 Spalten und 6 Reihen angeordnet. Die Vertiefungen sind in den Zeilen äquidistant angeordnet. Der Abstand zwischen den einzelnen Reihen ist jeweils gleich. Ein bevorzugtes Design eines Objektträgers mit 6 Vertiefungen kann von dem vorgenannten Objektträger mit 18 Vertiefungen in vorteilhafter Weise dadurch abgeleitet werden, dass die in einer Zeile angeordneten 3 Vertiefungen zu einen Vertiefung zusammengefasst werden. Dadurch ergibt sich ein Streifen-Design von 6 zueinander parallel angeordneten streifenförmigen Vertiefungen. Die Vertiefung auf dem Objektträger wird von Stegen und einer Basisplatte gebildet, wobei die Stege eine Höhe aufweisen, die der Ausparungstiefe der Vertiefungen entspricht. Die Höhe der Stege ist höher als die Höhe der Trägerfolie und der darauf angeordneten Gewebe- oder Zellprobe. Das Verhältnis aus diesen Abmessungen ist vorzugsweise mindestens 1,2, insbesondere mindestens 1,3 und besonders bevorzugt nicht kleiner als 1,4. Vorzugsweise übersteigt das Volumen der Vertiefung die Summe der das Volumina aus Gewebe- oder Zellprobe und Trägerfollensegment mindestens um das 1,5-fache und besonders bevorzugt mindestens um das 2-fache.

Zur Herstellung flächiger Gewebeschnitte werden vorzugsweise FFPE-Gewebe- oder Zellmaterialien verwendet, von denen mit Hilfe eines Mikrotoms flächige Gewebe- oder Zellschnitte mit einer Dicke von z.B. 0,5 bis 5 µm und insbesondere etwa 0,5 bis 2,5 µm erhalten werden. Die flächigen Gewebeschnitte werden vorzugsweise mechanisch verstärkt, indem sie auf eine insbesondere verformbare Trägerfolie wie z.B. eine Polycarbonatfolie aufgebracht werden. Anschließend können Zell- bzw. Gewebesegmente aus dem flächigen Gewebeschnitt z.B. mit einer Stanzvorrichtung ausgestanzt werden. Dabei wird die Ausdehnung der Gewebesegmente in der Ebene senkrecht zur ihrer Dicke so gewählt, dass die Gewebesegmente in einem nachfolgenden Schritt von einer Separiereinheit aufgenommen und in den Vertiefungen platziert werden können. Die Gewebesegmente können in den Vertiefungen z.B. mit Hilfe eines UV-härtbaren Klebstoffs fixiert werden.

Unter Verwendung eines geeigneten hydrophoben Rasters können die Volumina aus Gewebe und Folie und Kleber auch nahezu gleich sein (fast ebene Fläche), denn die aufgebrachten Flüssigkeiten würden durch die hydrophoben Kräfte aufgrund der Oberflächenspannung immer über dem Gewebe im Reaktionsfeld möglicherweise vorgewölbt verbleiben, so dass es zu keiner Kontamination kommt. Eine nahezu plane Fläche hat den Vorteil, dass beim abschließenden Eindeckvorgang (Permanenteindeckung der Objektträger) relativ wenig Eindeckmedium verwendet werden muss; letzteres enthält Lösungsmittel, welches mit der Zeit verdampft, wodurch Schrumpfungsartefakte entstehen, der Objektträger zieht dann Luft und kann nicht mehr mikroskopiert werden. Luft weist einen anderen Brechungsindex als Glas bzw. Eindeckmedium auf, während das Eindeckmedium einen glasähnlichen Brechungsindex besitzt.

Da die in der Paraffin-Matrix eingebetteten, Formalin-fixierten Gewebe- oder Zellmaterialien, aus denen die flächigen Gewebeschnitte erhalten werden, typischerweise inhomogen sind, d.h. in drei Dimensionen unregelmäßig geformte kranke bzw. gesunde Bereiche aufweisen, werden vorzugsweise Gewebe- oder Zellsegmente aus mehreren flächigen Gewebeschnitten ein und desselben Gewebe- oder Zellmaterials ausgestanzt und in Vertiefungen von Objektträgern überführt. Auf diese Weise wird sichergestellt, dass ein repräsentatives Bild der Gewebeprobe untersucht wird. Gegebenenfalls können die flächigen Gewebe- oder Zellschnitte vor der Ausstanzung von Gewebe- oder Zellsegmenten von der Pathologin bzw. dem Pathologen visuell inspiziert werden, um z.B. flächige Schnitte, die lediglich Paraffin und praktisch keinerlei Gewebe- oder Zellmaterial enthalten, oder flächige Gewebeschnitte, die im wesentlichen nur gesundes Gewebe- oder Zellmaterial enthalten, auszusondern.

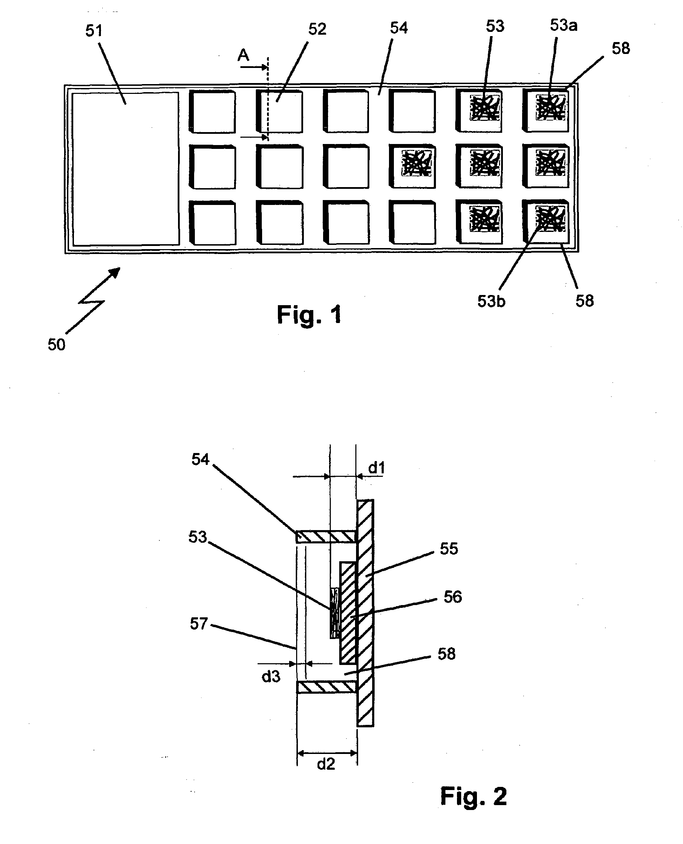

In der WO 2007/134,814 wird beispielsweise eine automatisch arbeitende Vorrichtung zur reproduzierbaren Herstellung von auf Objektträgern angeordneten zu untersuchenden Zell- oder Gewebeproben offenbart. Auf diese Anmeldung, der insbesondere die Figuren 1 und 2 der vorliegenden Anmeldung entnommen sind, wird in der vorliegenden Anmeldung vollumfänglich Bezug genommen.

Die Vorrichtung weist Haltevorrichtungen zur Aufnahme einer Vielzahl, d.h. von einem bis 200 Objektträgern auf. Die Haltevorrichtungen können vorzugsweise an einem oder mehreren Tabletts befestigt sein, die dann z.B. außerhalb der Vorrichtung mit Objektträgern beladen und in die Vorrichtung eingesetzt werden können. Es ist natürlich auch möglich, dass die Haltevorrichtungen bzw. die Tabletts fest mit der Vorrichtung verbunden sind, sodass die Objektträger dann direkt in diese in der Vorrichtung befindlichen Haltevorrichtungen eingesetzt werden.

Die Größe, Form und Ausgestaltung der Tabletts ist variabel. So können die Tabletts z.B. einstückig oder mehrstückig ausgebildet sein. Einstückig ausgebildete, im wesentlichen rechteckige Tabletts können z.B. einen im wesentlichen rechteckigen Rahmen aufweisen, der mehrere parallel nebeneinander angeordnete Leisten oder ein rasterförmiges Gitter aufweist, auf denen die Objektträger befestigt werden. Wenn die Größe eines solchen einstückigen Tabletts der Größe des Reaktionsraums der Vorrichtung entspricht, muss pro Analysevorgang nur ein Tablett in die Vorrichtung eingesetzt werden, wodurch die Handhabung der Vorrichtung erleichtert wird. Bei mehrstückig ausgebildeten Tabletts sind z.B. der Rahmen des Tabletts und die einzelnen Leisten oder gitterförmigen Raster oder Rasterteile nicht fest, sondern lösbar miteinander verbunden. Dadurch kann die Beladung der Tablettteile erleichtert werden, während nur ein Tablett in die Vorrichtung eingesetzt werden muss. in einer anderen Ausführungsform können zwei oder mehr Tabletts in die Vorrichtung eingesetzt werden. Dies kann z.B. vorteilhaft sein, wenn Objektträger an verschiedenen Arbeitsplätzen mit Zell- oder Gewebeproben beladen werden.

Die Objektträger werden durch die Haltevorrichtungen lösbar mit dem einen oder mehreren Tabletts bzw. mit der Vorrichtung verbunden, wobei insbesondere mechanische Haltevorrichtungen zum Einsatz kommen. Die Objektträger können dabei z.B. durch Clips oder ähnliche Haltevorrichtungen befestigt werden. Es können weiterhin mechanische Befestigungssysteme mit weiblichen und männlichen Befestigungselementen zum Einsatz kommen, wobei ein Befestigungselementtyp auf dem Objektträger und der andere auf dem oder den Tabletts bzw. der Vorrichtung angeordnet sind. So können die Objektträger z.B. kreisförmige Durchgangslöcher aufweisen, die in entsprechende Stifte auf dem oder den Tabletts bzw. der Vorrichtung eingreifen. Die Objektträger können z.B. auch auf der unteren, den Reaktionszonen gegenüberliegen Seite z.B. pilzförmige Mikrohaken aufweisen, die in einer faserförmiges Vlies eingreifen, das auf dem oder den Tabletts bzw. der Vorrichtung angeordnet ist. Durch entsprechende Positionierungs- oder Leitelemente kann dabei vorzugsweise sichergestellt werden, dass die Objektträger im Wesentlichen immer in der gleichen Orientierung auf der Vorrichtung befestigt werden.

Die durch die Anordnung der Haltevorrichtungen bedingte Anordnung der Objektträger auf dem oder den Tabletts oder in der Vorrichtung kann regelmäßig oder unregelmäßig sein, wobei eine regelmäßige Anordnung bevorzugt ist. In einer besonders bevorzugten Ausführungsform ist die Anordnung der Haltevorrichtungen so gewählt, dass die Objektträger eine regelmäßige, rechtwinklige Matrix mit Reihen und Spalten bilden. Dabei werden die Objektträger vorzugsweise so eingesetzt, dass die Beschriftungsfelder, die z.B. einen Code oder ähnliche Identifizierungselemente enthalten können, immer in die gleiche Richtung zeigen.

Die Vorrichtung umfasst vorzugsweise eine Vorrichtung, mit der einzelne Objektträger bzw. Gruppen von Objektträgern durch Vibration bewegt werden können, wodurch in die Reaktionszonen eindosierte Reagenzien durchmischt werden können. Dadurch kann weiterhin eine gleichmäßige Benetzung der Gewebe- und Zellprobe in den Reaktionszonen mit den Reagenzien befördert werden. Weiterhin können so auch Spülmittelreste, ggf. auch nach Drehung der drehbar gelagerten Objektträger um z.B. etwa 180° mechanisch abgeschüttelt werden.

Die Vorrichtung weist weiterhin bevorzugt eine Vorrichtung auf, um einzelne Objektträger oder Gruppen von Objektträgern, zu erwärmen. Die Erwärmung kann z.B. im einfachsten Fall durch eine Raumluftbeheizung oder aber auch durch komplexere Vorrichtungen wie z.B. in der Nähe der Objektträger angeordnete elektrische Heizungen oder durch Beaufschlagung mit IR-Strahlung erfolgen. Eine Erwärmung der Objektträger und damit der Reaktionszonen ist vorteilhaft, da dadurch die für die Inkubationen der Gewebe- oder ZellProben mit Antikörpern benötigt Zeit verkürzt werden kann, wobei die Temperatur durch die Denaturierung der Antikörper bei ca. 42°C bzw. die Ablösung der Hybride oberhalb der Schmelztemperatur begrenzt ist. Für die Immunhistochemie und in der Regel für die FISH-Analysen sind Betriebstemperaturen von ca. 37-42 °C vorteilhaft. Bei ISH-Analysen können demgegenüber höhere Temperaturen gefahren werden. Eine Beschleunigung der Reaktionen kann auch durch eine Erhöhung der Konzentration der Reagenzien erzielt werden.

Immunhistochemische Antikörperinkubationen benötigen typischerweise einen Zeitraum von 20 bis 60 min (durchschnittlich 30 min), während molekularbiologische Hybridisierungen typischerweise viele Stunden oder Tage benötigen. Daher ist die gleichzeitige Durchführung von immunhistochemischen und molekularen Analysen in der Regel nicht sinnvoll. Weiterhin sollten für immunhistochemische Analysen typischerweise zwischen 100 und 200 Antikörper verfügbar sein, während für FISH- und ISH-Analysen lediglich typischerweise 10 bis 30 Sonden benötigt werden. Daher werden für immunhistochemische bzw. molekulare Analysen vorzugsweise verschiedene Dosierköpfe verwendet. Im Hinblick auf diese Unterschiede ist es ggf. vorteilhaft, für immunhistochemische bzw. molekulare Analysen verschiedene, im Hinblick auf die jeweiligen Erfordernisse optimierte erfindungsgemäße Vorrichtungen zu verwenden. Bevorzugt ist auch eine erfindungsgemäße Vorrichtung mit zwei Submodulen, wobei Teile der Hardware und die Software vorzugsweise parallel genutzt werden können.

Die Haltevorrichtungen sind vorzugsweise so angeordnet, dass sich die Oberseiten der Objektträger mit den Vertiefungen/ Reaktionszonen im Wesentlichen in einer Ebene befinden. Mit anderen Worten befinden sind die Objektträger im Wesentlichen in einer Ebene angeordnet Dies hat den Vorteil, dass die Positionierungsvorrichtung, die den Dosierkopf trägt, lediglich zweidimensionale Bewegungen ermöglichen muss. Die Positionierungsvorrichtung ist vorzugsweise ein herkömmliches kartesisches X/Y-System, das z.B. Schrittmotoren aufweist. Typischerweise ist eine Positioniergenauigkeit von ± 0,25 mm ausreichend. Die erfindungsgemäße Vorrichtung umfasst weiterhin einen an der Positionierungsvorrichtung befestigten Dosierkopf mit einer Vielzahl von Vorratsbehältern, weiche zur Durchführung von Reaktionen wie z.B. Färbe- Nachweisreaktionen geeignete flüssige Reagenzien enthalten.

Der Dosierkopf umfasst vorzugsweise zwischen 1 bis 288, vorzugsweise ein Vielfaches von 6, Vorratsbehälter.

Die Vorratsbehälter weisen jeweils ein den Vertiefungen des darunter befindlichen Objektträger zugewandtes Ende auf, das jeweils mindestens ein Dosierventil mit einer Auslassvorrichtung zur Dosierung und Einbringung der Reagenzien in die Vertiefungen bzw. Reaktionszonen aufweist. An dem den Dosierventilen gegenüberliegenden Ende weisen die Vorratsbehälter vorzugsweise gasdichte Verschlüsse oder Deckel auf. Das den Dosierventilen gegenüberliegende Ende der Vorratsbehälter ist somit gasdicht verschließbar. Dabei können die Vorratsbehälter individuell mit einem gasdichten Deckel versehen sein, oder mehrere oder vorzugsweise alle Vorrratsbehälter können einen gemeinsamen gasdichten Deckel aufweisen. Der Deckel bzw. die Deckel weisen vorzugsweise mit Einlassventilen versehene Anschlüsse auf, an die über eine bzw. ggf. mehrere Leitungen ein Gasüberdruck angelegt werden kann. Dabei werden die Reagenzien in den Vorratsbehältern vorzugsweise mit einem konstanten Gasüberdruck beaufschlagt, sodass die flüssigen Reagenzien bei Öffnung der Dosierventile an dem anderen Ende der Vorratsbehälter mit konstanter Geschwindigkeit in die Vertiefungen bzw. Reaktionszonen abgegeben werden können. Als Gas kann Luft oder ein inertes Gas wie z.B. N₂ verwendet werden. Dadurch kann die gewünschte zu dosierende Menge des Reagenzes bei entsprechender Eichung durch die Öffnungszeit des Dosierventils bestimmt werden.

Der Dosierkopf weist nach einer vorteilhaften Weiterbildung eine Dosierkontrolle auf.

Dabei wird vorgeschlagen am oder unterhalb des Ausgangs der Dosierventile insbesondere mit optischen Sensoren zu prüfen, ob das abdosierte Reagenz auch tatsächlich abgegeben wurde. Dabei wird über die Unterbrechung eines Lichtstrahls, insbesondere Infrarot-Lichtstrahls, bei einsetzender Abdosierung zum einen das Abdosieren selbst kontrolliert, d.h., ob der Dosiervorgang erfolgreich in Gang gesetzt und beendet wurde. Um ein sicheres beispielsweise farbunabhängiges Ausgangssignal zu erhalten wird dabei der Anstieg (Volumen über Zeit( dV/dt); beispielsweise mittels eines A/D- Wandlers (Analog-Digital-Wandlers) ausgewertet. Zudem ist zusätzlich auch eine zeitliche Auswertung des Dosierungsvorgangs möglich, wobei die Zeitspanne der Unterbrechung des Lichtstrahls gemessen wird und so anhand der gemessenen Unterbrechungsdauer und dem eingestellte und überwachten Systemdruck das abgegebene Volumen berechnet wird. Dies ist insofern vorteilhaft, da dadurch die Betriebssicherheit der Vorrichtung erhöht wird und eine Rückmeldung des jeweiligen Befüllungsstandes des einzelnen Vorratsbehälters ermöglicht werden kann.

Alternativ ist auch denkbar, anstelle der optischen Durchflusskontrolle ein kapazitives Durchflussmesssystem vorzusehen, bei welchem eine messbare Kapazitätsänderung erkannt und zur Kontrolle des Dosiervorgangs eingesetzt wird.

Die Dosierventile sind vorzugsweise in einem Ventilblock am unteren Ende der Vorratsbehälter angeordnet Die Dosierventile sind vorzugsweise nicht mit Dosierspitzen versehen, da sonst ein Totraum-Volumen (nämlich das der Dosierspitze) entstünde. Die Dosierung erfolgt also vorzugsweise über die Löcher einer Lochplatte, die unter den Ventilen angegeben ist. Gegebenenfalls kann die Auslassöffnung des Dosierventils Mikro- oder Dosiernadeln aufweisen, deren Durchmesser deutlich kleiner als der Querschnitt der Reaktionszonen bzw. der Vorratsbehälter des Dosierkopfes ist, um das Totraumvolumen zu begrenzen.

Ferner kann eine optische Blasenkontrofle vorgesehen sein, um nicht erwünschte Luftblasen im Eluat zu ermitteln.

Die Vorratsbehälter des Dosierkopfes weisen eine Querschnittsfläche und eine dazu im Wesentlichen senkrechte Höhe zwischen den beiden Enden auf, die das Dosierventil bzw. den gasdichten Deckel aufweisen. Die Vorratsbehälter weisen dabei vorzugsweise ein mittlere Querschnittsfläche von weniger als 1 cm² auf. Die Vorratsbehälter werden dabei vorzugsweise mit Reagenzien eines färbealgorithmischen Panels befüllt. Die Anordnung der Vorratsbehälter in dem Dosierkopf ist vorzugsweise in Anpassung an das jeweils vorliegende Design der Objektträger so zu wählen, dass einander benachbarte Vorratsbehälter über mindestens zwei vorzugsweise benachbarten Vertiefungen bzw. Reaktionszonen der Objektträger positioniert werden können, um diese mit Reagenzien zu beaufschlagen. Dabei ist weiter die Querschnittsfläche benachbarter Vorratsbehälter in Anpassung an die Dimensionen der Reaktionszonen und der dazwischen liegenden Stege so zu wählen, dass zwei Vertiefungen bzw. Reaktionszonen von den beiden benachbarten Vorratsbehältern simultan mit Reagenzien beaufschlagt werden können, wobei die beiden Reaktionszonen einander vorzugsweise benachbart sind. Gegebenenfalls kommt aber auch eine simultane Beaufschlagung von versetzt angeordneten Reaktionszonen in Betracht. Dabei ist die Anordnung der Vorratsbehälter in dem Dosierkopf besonders bevorzugt so zu wählen, dass mindestens drei, vorzugsweise mindestens vier und ganz besonders mindestens sechs benachbarte Vertiefungen bzw. Reaktionszonen simultan von Vorratbehältern mit Nachweisreagenzien beaufschlagt werden können.

Erfindungsgemäße Vorrichtungen, die ein solches multiparalleles Dosieren von Reagenzien in verschiedene Vertiefungen bzw. Reaktionszonen von einem oder mehreren, im Reaktionsraum angeordneten Objektträgern ermöglichen, sind besonders bevorzugt. Durch die multiparallele Betriebsweise wird eine erhebliche Beschleunigung der Analysenzeit und damit eine deutliche Verringerung der Analysenkosten erreicht. Darüber hinaus können die multiparallel applizierten Reagenzien vorzugsweise in algorithmischen Panels zusammengefasst werden, wodurch eine besonders effektive und zielgerichtete pathologische Diagnostik ermöglicht wird. Die erfindungsgemäße Vorrichtung ist damit sehr viel besser als bisher im Stand der Technik verfügbare Pipettier-Automaten für Reihenuntersuchungen im Gesundheitswesen geeignet.

Die erfindungsgemäße Vorrichtung erlaubt es aber auch, "Standart-Objektträger" mit jeweils nur einer Probe ohne Einschränkung und bei deutlich geringeren Kosten zu bearbeiten. Dabei wird über dem Probenmaterial nur ein Ventil geöffnet und abdosiert, so dass zu den erwähnten Vorteilen vollständige Flexibilität hinzukommt. So könnte es beispielsweise notwendig sein, dass ein sehr heterogenes Gewebe nicht geteilt werden kann und der Schnitt "im Ganzen" bearbeitet werden muss; oder es könnte sein, dass Fremdschnitte bearbeitet werden müssten, die nicht weiter manipuliert werden können.

Das Volumen der Vorratsbehälter wird durch deren Querschnittsfläche und deren Höhe, d.h. den Abstand zwischen dem vorzugsweise mit einem gasdichten Deckel versehenen Ende und dem gegenüberliegenden, von einem Dosierventil begrenzten Ende, bestimmt. Das Volumen der Vorratsbehälter ist dabei so dimensioniert, dass es die Durchführung von vorzugsweise einer bis 200 einzelnen Reaktionen wie z.B. ABC-Färbe-Nachweisreaktionszyklen gestattet, ohne dass eine erneute Befüllung des Vorratsbehälters erforderlich wäre. Dies stellt einen weiteren erheblichen Vorteil gegenüber aus dem Stand der Technik bekannten Vorrichtungen dar, bei denen die Pipettenspitzen typischerweise nach erfolgter Einmal-Dosierung abgeworfen werden und für den nächsten Pipettiervorgang neue Pipetten-Spitzen geladen werden müssen. Bei den erfindungsgemäßen Vorrichtungen entfällt damit das extrem zeitaufwendige Fahren des Pipettierkopfes an die Nachladestation nach jedem Dosiervorgang und das Wegwerfen der Einmal-Pipettenspitzen, das aus Kosten- und Umweltgründen unerwünscht ist. Die erfindungsgemäße Vorrichtung kann damit erheblich zeiteffektiver und damit auch kostengünstiger betrieben werden als herkömmliche Pipettier-Vorrichtungen. Die erfindungsgemäße Vorrichtung ist damit sehr viel besser als bisher im Stand der Technik verfügbare Pipettier-Automaten für Reihenuntersuchungen im Gesundheitswesen geeignet

Die Vorratsbehälter des Pipettierkopfes werden vorzugsweise so dimensioniert, dass alle ggf. mit mindestens einem Tablett in die Vorrichtung eingespannten Objektträger mit Nachweisreagenzien beaufschlagt werden können, die aus den Vorratsbehältern entnommen werden, ohne dass eine zwischenzeitliche Befüllung der Vorratbehälter erforderlich wäre. Nimmt man z.B. an, dass die Vorrichtung ein Tablett mit 96 (8 x 12) Objektträgern aufnehmen kann, dass jeder Objektträger 18 (3 x 6) Reaktionszonen mit einem Volumen von jeweils ca. 10 bis 20 µl hat und dass pro Reaktionszone - ohne Berücksichtigung der Spülvorgänge - Reagenzien in bis zu 6 Schritten aufgebracht werden müssen, ergibt sich für das Gesamtvolumen des Dosierkopfes, d.h. für die Summe der Volumina aller Vorratsbehälter ein Volumen von etwa 100 bis 200 ml. Geht man davon aus, dass etwa 120 Reagenzien in 120 Vorratsbehältern benötigt werden, ergibt sich bei Annahme eines gleichmäßigen Verbrauchs aller Reagenzien ein Volumen pro Vorratsbehälter von etwa 5 ml. Denkbar ist auch ein Volumen von 7 ml. Bei den 6er Objektträgern werden ca. 30 bis 50 µl verwendet.

Unabhängig von diesen Betrachtungen werden die Vorratsbehälter vorzugsweise so ausgelegt, dass ihr mittleres Volumen mindestens 1,5 ml, insbesondere mindestens 2,5 ml, besonders bevorzugt mindestens 4 ml und ganz besonders bevorzugt mindestens 5 ml beträgt. Die Vorratsbehälter können dabei alle das gleiche Volumen aufweisen.

Dabei soll vorzugsweise der Quotient aus dem mittleren Volumen der Vorratsbehälter und dem mittleren Volumen der Vertiefungen mindestens 50 sein.

Da einzelne Reagenzien wie z.B. das Sekundärantikörper-Reagenz und z.B. die Spülflüssigkeit, die im wesentlichen für alle Färbereaktionen gleich sind, häufiger und in größeren Volumina benötigt werden als andere Reagenzien (wie z.B. die Primär-Reagenzien bei der ABC-Methode), können die häufiger benötigten Reagenzien mehrfach im Dosierkopf oder in größeren Gefäßen im Außenbereich des Dosierkopfes untergebracht werden. Beispielsweise ist denkbar, größere Volumina aufnehmende Vorratsbehälter im oder am Gehäuse der Vorrichtung selbst anzuordnen, so dass diese und die darin bevorratete Sekundärantikörper- oder Spülflüssigkeit nicht mit dem Dosierkopf selbst mitbewegt werden müssen. Um die geforderten größeren Volumina an den Nachweisreagenzien (Sekundär- und ggf. Tertiärreagenz) sowie Substrat, Gegenfärbungs-Reagenz oder Spüllösung dosieren zu können, können diese über mehrere Schläuche geführt werden, wobei die Schläuche über Schleppketten durch das kartesische System bis hin zu einer Position nahe dem Dosierkopf gezogen werden. Insbesondere wird dabei vorgeschlagen, am Dosierkopf selbst entsprechende Halterungen für die Schlauchauslässe vorzusehen, so dass diese mit dem Dosierkopf über die darunter befindlichen Objektträger geführt werden können. Es ist denkbar, am Schlauchauslass selbst wiederum einen Ventilkopf gegebenenfalls mit Dosierkontrolle vorzusehen, über welchen die Dosierung der benötigten Volumina an Nachweisreagenzien (Sekundär- und ggf. Tertiärreagenz) sowie Substrat, Gegenfärbungs-Reagenz oder Spüllösung erfolgen kann. Alternativ ist auch denkbar, den Ventilkopf am Vorratsbehälter selbst anzuordnen, insbesondere um das durch den Dosierkopf zu transportierende Gewicht gering zu halten. Dabei ist vorzugsweise vorzusehen, dass diese Schlauchsysteme gespült werden können.

Falls die Vorratsbehälter nicht alle das gleiche Volumen haben, weist der kleinste Vorratsbehälter vorzugsweise ein Volumen von ca. 5 ml oder mehr auf.

Der Dosierkopf kann in einer besonders vorteilhaften Weiterbildung als 'Sandwich' mit wechselbaren Platten bzw. Blöcken aufgebaut sein und z.B. einen abdichtenden Deckel, einen zu einer Einheit zusammengefassten Block aus Vorratsbehältern, einen Block aus Dosierventilen und/ oder einen Block aus Durchflusssensoren aufweisen. Die einzelnen Platten bzw. Blöcke können bei Bedarf, beispielsweise bei verschlissenen Ventilen oder bei durch Ablagerungen dauerhaft verschmutzten Vorratsbehältern gegen andere Platten bzw. -blöcke ausgetauscht werden. Dies erlaubt eine hohe Wartungsfreundlichkeit und eine Modularität für eventuelle Erweiterungen. Auch ermöglicht diese modulare Austauschmöglichkeit der einzelnen Platten bzw. Blöcke des Dosierkopfes einen kostensparenden Betrieb der erfindungsgemäßen Vorrichtung, da insbesondere bei einer Verschmutzung der Vorratsbehälter des Dosierkopfes lediglich diese, aber nicht die kostenintensiven Dosierventile ausgetauscht werden müssen.

Ein oder mehrere Dosierköpfe sind vorzugsweise lösbar in eine Dosierkopfhalterung einsetzbar. Dadurch wird ein Austausch von z.B. entleerten Dosierköpfen oder die Einbringung eines Dosierkopfes mit anderen Reagenzien leicht möglich. Auch der Dosierkopf selbst kann mittels vorzugsweise maschinenlesbarer Codes markiert und damit identifizierbar sein.

Die Vorratsgefäße können bei Bedarf mit einem Füllstandssensor versehen sein. Alternativ dazu kann das Gesamtsystem über einen Füllstandserfassungsvorrichtung verfügen, beispielsweise in Form eines Triangulationssensors. Nach Entfernen der oberen Abdichtung der Vorratsbehälter des Dosierkopfes (Deckel), können die einzelnen Vorratsbehälter des Dosierkopfes unter der Füllstandserfassungsvorrichtung hindurch gefahren werden und der Füllstand der einzelnen Vorratsbehälter auf einfache und effektive Weise ermittelt werden.

In einer bevorzugten Ausführungsform können in der Dosierkopfhalterung gehalterte und teilentleerte oder vollständig entleerte Dosierköpfe bzw. die im Dosierkopf gehalterten Vorratsbehälter von dem Positionierungssystem zu einer Nachfüllstation bzw. Befüllungsstation gefahren werden. Um ein manuelles Nachfüllen der relativ kleinen Volumina im Dosierkopf und damit eine Fehlerquelle (Vertauschen von Reagenzien bei dem manuellen Nachfüllen) zu vermeiden, ist die Nachfüllstation bzw. Befüllungsstation vorzugsweise automatisiert betreibbar und wird von einer entsprechenden Software unterstützt. Der auf dem kartesischen System montierte Dosierkopf wird dabei unter eine feststehende Nachfüllstation bewegt, welche mit größeren Vorratsbehältern der verwendeten Reagenzien versehen ist. Automatisiert und individuell werden dann die einzelnen Vorratsbehälter im Dosierkopf wieder befüllt. Dabei sind die zuvor aus den einzelnen Vorratsbehältern abdosierten Volumina der Steuerung der Vorrichtung bekannt (remanent gespeichert), insbesondere durch Erfassung des Abflusses durch die Dosierkontrolle und/oder die Füllstandssensoren in den einzelnen Vorratsbehältern. Vor diesem Füllvorgang wäre dabei lediglich die obere Abdichtung der Vorratsbehälter (Deckel) zu entfernen, was grundsätzlich auch automatisch erfolgen kann.

Die Vorratsbehälter des Dosierkopfes sind vorzugsweise nummeriert. In einer bevorzugten Ausführungsform weisen die einzelnen Vorratsbehälter jeweils Identifikationselemente auf und können einzelne oder in Gruppen angesteuert werden.

Immunhistochemische oder molekularbiologische Nachweisreaktionen sind in der Regel Mehrschritt-Reaktionen, wobei nach jedem Reaktionsschritt typischerweise ein Spülschritt folgt. So weist z.B. die immunhistochemische Standard-Färbereaktion, die sogenannte ABC-Methode (Avidin-Biotin-Complex-Methode), mindestens 3 Reaktionsschritte auf (Dosieren mit Primärantikörper, Sekundärantikörper und Tertiärreagenz), wobei nach den einzelnen Reaktionsschritten jeweils beispielsweise 3 Spülschritte erfolgen und sich an jeden Spülschritt jeweils vorzugsweise ein leichter Trocknungsschritt (nicht Austrocknen) anschließt. Auch die molekularbioligischen Standardverfahren ISH (In-situ Hybridisierung) bzw. FISH (Fluoreszenz In-situ Hybridisierung) sind Mehrschrittverfahren.

In einer vorteilhaften Ausgestaltung der Vorrichtung der vorliegenden Erfindung ist zur Durchführung der Spülschritte unterhalb der Objektträgerebene eine mit Spülflüssigkeit gefüllte Spülwanne vorgesehen. In dieser Ausgestaltung sind die gegebenenfalls in Tabletts angeordneten Objektträger einzeln und/ oder zusammen mit anderen Objektträgern von einer ersten, zur Durchführung der Nachweisreaktionen geeigneten Position in eine zweite, in dem Behälter befindliche Position überführbar.

Vorteilhafterweise sind die Objektträger in einer matrixförmigen Anordnung aus Reihen und Spalten angeordnet, wobei die Leisten mit Objektträgern, die die Spalten bilden, einzeln absenkbar sind und dadurch in Kontakt mit der Spütflüssigkeit gebracht werden können. Es können natürlich auch andere Teilbereiche der Objektträger-Matrix wie z.B. Reihen, Teile von Spalten etc. absenkbar angeordnet sein. Die Objektträger-Leisten, die die Spalten-bzw. Reihen bilden, können alternativ oder zusätzlich auch drehbar gelagert sein, so dass die Objektträger durch Drehen in die Spülflüssigkeit überführt werden können. Aus zeitökonomischen Gründen ist es vorteilhaft, dass einzelne Objektträger oder Gruppen von Objektträger bzw. der Objektträgern abgesenkt werden können, da dann nicht abgesenkte Objektträger weiterhin von dem Dosierkopf angesteuert und mit Reagenz beaufschlagt werden können. Zudem sollte vorzugsweise für einen bestimmten Reaktionsschritt die Einwirkzeit der Reagenzien auf die Gewebe- oder Zellproben in den einzelnen Reaktionszonen im Wesentlichen gleich sein.

Die unter der Objektträger-Ebene angeordnete Spülwanne kann beispielsweise aus rostfreiem Stahl (VA-Stahl) gefertigt sein. Sie besitzt vorzugsweise einen Zu-und Ablauf für die Spülflüssigkeit, um eine Kontamination der Reaktionszonen durch verunreinigte Spüllösung zu vermeiden. Die Spüllösung kann beispielsweise im Wesentliche aus Wasser bestehen, dem zur Vermeidung von Keimbildung Detergentien und z.B. NaAcid zugesetzt werden können. Auch der ständige Austausch der Spüllösung dient der Vermeidung von Keimbildung.

Über einen Pegelsensor wir ein vorzugsweise konstanter Flüssigkeitspegel der Spülflüssigkeit in der Spülwanne eingestellt. Die Pegelhöhe ist einstellbar und kann z.B. an die Position der um 180° gedrehten Objektträgern mit den dann in Richtung Spülwanne zeigenden Reaktionszonen angepasst werden.

Der erfindungsgemäß vorgeschlagene Spülmechanismus mittels Überführen von einem oder mehreren Objektträgern in die Spülwanne mit einem großen Überschuss an Spülflüssigkeit stellt eine erhebliche Beschleunigung und Vereinfachung des Spülvorganges dar. Eine Kontamination durch Verschleppen der einzelnen Reagenzien von einem Objektträger auf einen anderen bei dieser Art des Spülvorganges wurde dabei nicht beobachtet, wenn das Volumen der Spülwanne ausreichend groß dimensioniert wird. Das Volumen der Spülwanne beträgt vorzugsweise mindestens das 100-fache des Volumens der gespülten Reaktionszonen. Nimmt man an, dass 10 Objektträger mit jeweils 18 Reaktionszonen, die jeweils ein Volumen von 50 µl aufweisen, gleichzeitig gespült werden, sollte das Volumen der Spülwanne mindestens etwa 1000 ml betragen. Unabhängig von dieser Abschätzung, kann die Spülwanne vorzugsweise ein Volumen von mindestens 500 ml, insbesondere von mindestens 1 l und ganz besonders von mindestens 1,5 l aufweisen.

Nach jedem Spülvorgang weisen die Reaktionszonen typischerweise Reste von Spülflüssigkeit auf, die vorzugsweise entfernt werden, um eine unerwünschte Verdünnung des Reagenz im nachfolgenden Reaktionsschritt oder gar ein Überflutung der Reaktionszone zu vermeiden; letzteres könnte zu einer Kontamination anderer Reaktionszonen des Objektträgers führen. Zur Entfernung der Spülflüssigkeit kann vorzugsweise ein Strom mit Luft oder einem insbesondere inerten Spülgas wie z.B. N₂ über den Objektträgern erzeugt werden. Die Beaufschlagung mit Luft oder einem Spülgas wird vorzugsweise so durchgeführt, dass ein laminarer Luft- oder Gasstrom entsteht. Dabei ist allerdings wichtig, dass die Reaktionszonen nie komplett austrocknen, was zu einer Denaturierung der Zell- oder Gewebeproben führen könnte.

Um ein Austrocknen der Zell- oder Gewebeproben zu vermeiden, weist der Reaktionsraum vorzugsweise eine Abdeckung vorzugsweise in Form einer Abdeckhaube zum Verschließen des gesamten Reaktionsraums der Vorrichtung auf. Die Abdeckung wird besonders vorteilhaft in Kombination mit der unter der Ebene der Objektträger angeordneten Spülwanne eingesetzt. Durch eine leichte Erwärmung der Spülflüssigkeit in der Spülwanne verdampft etwas Spülflüssigkeit und gelangt in den Luft- bzw. Gasraum über der Ebene der Objektträger, wodurch eine temperierte, feuchte Reaktionskammer entsteht.

Die Vorrichtung weist vorzugsweise ein zentrales Bedienungspanel wie beispielsweise ein ¼ oder 1/1 VGA-Touch-Panel auf. Eine Software-Schnittstelle zu übergeordneter Pathologie-Software ist nicht zwingend erforderlich, da die Vorrichtung die Analysen autark durchführt, ohne dass dazu eine Datenübergabe aus bestehenden Systemen erforderlich ist.

Es werden dennoch vorzugsweise folgende Schnittstellen vorgesehen:
- Eine USB/ Ethernet-Schnittstelle für eine eventuelle Protokollierung und Interaktion mit einer übergeordneten Software (Pathologiesoftware oder z.B. auch Patho-Link und/oder dgl.), wodurch z.B. Anforderungen/Aufträge eines Gutachters direkt am Mikroskop in das System eingepflegt werden könnten, um dann im Labor und von der Maschine nach entsprechender Codierung verwechslungsfrei abgearbeitet zu werden. Dadurch könnten logistische Vorteile erzielt werden. Dabei kann die Ethernet-Schnittstelle als TCP/IP Schnittstelle zur Verbindung der erfindungsgemäßen Vorrichtung mit Peripheriegeräten, wie beispielsweise einem Drucker oder anderen datentechnischen Geräten ausgebildet sein.
- Eine ISDN/Analog/Ethernet - Schnittstelle für die Fernwartung.

Insbesondere werden dabei neben den herkömmlichen bekannten bidirektionalen kabelbasierten Verbindungen auch moderne bidirektionale kabellose Datenverbindungen, insbesondere per Funkverbindung herstellbare Datenverbindungen, vorgeschlagen.

Die FFPE-Mikrotom-Schnitte müssen vor der immuhistochemischen oder molekularbiologischen Analyse vorbehandelt werden. Dazu werden die Schnitte zunächst durch ein Lösungsmittel entparaffiniert (z.B. 3 x 10 min. Xylolbad), über eine absteigende alkoholische Reihe (z.B. 100%-96%-70%-70% Ethanol für jeweils 1 min) in eine wässrige Lösung überführt, um schließlich dann mit einem Wärmeverfahren in einer Pufferlösung behandelt zu werden (hierzu können Mikrowellenbehandlung, Dampftopf oder Dampfgarer eingesetzt werden).

Diese Vorbehandlung der Schnitte bzw. der in den Vertiefungen abgelegten Gewebe- oder Zellproben kann in der erfindungsgemäßen Vorrichtung erfolgen. Hierzu sind in die Vorratsbehälter des Dosierkopfes die erforderlichen Reagenzien einzubringen, und entsprechende Vorrichtung zur Wärmebehandlung der Schnitte vorzusehen. Es wurde gefunden, dass eine derartige Erweiterung der erfindungsgemäßen Vorrichtung tendenziell die Komplexität und damit die Kosten der Vorrichtung erhöht und die Robustheit der Vorrichtung emiedrigt. Hinzu kommt, dass in der Praxis die Schnitte im Hinblick auf den einzusetzenden Primärantikörper vorzugsweise z.T. einer unterschiedlichen Wärmebehandlung ausgesetzt werden (z.B. in der Mikrowelle, im Dampfgarer oder im Dampftopf) und vorzugsweise unterschiedliche Pufferlösungen verwendet werden. Als Beispiele für eine bevorzugte verschiedene Behandlung von Schnitten bei Einsatz verschiedener Primär-Antikörper seien genannt:
HSP 90: 10 min. Proteinase K: 1 Trpf. PK (DAKO Cytomation, Code No.S 2019) in 2ml Dilutionsmedium (DAKO Cytomation, Code No. S 2032) bei RT.
CyclinA: 45 min kochen im Dampfgarer (MultiGourmet, Firma Braun) mit Zitronensäure (2g Citric Acid Monohydrate/ 1,0 i A.d., pH6).
Jaw 1/Ki-67: 20/15 min. Druck-Kochtopf mit Zitronensäure (2g Citric Acid Monohydrate/ 1,0 l Ad. ,pH6).
Bevorzugt sind daher erfindungsgemäße Vorrichtungen, die nicht zur Vorbehandlung von Gewebe- oder Zellschnitten ausgelegt sind.

Die Reagenzien für immunhistochemische und molekularbiologische Nachweisreaktionen sind kommerziell verfügbar und werden im Hinblick auf die gewünschte Untersuchungsmethode ausgewählt. Für immunhistochemische Untersuchungen stehen derzeit etwa 250 etablierte Antikörper zur Verfügung, die insbesondere zur Durchführung der immunhistochemischen Standard-Färbemethode, der sogenannten Avidin-Biotin-Complex- (ABC-) Methode, verwendet werden können.

Der Dosierkopf bzw. die Dosierkopfhalterung der Vorrichtung ist vorzugsweise mit einer z.B. von Peltier-Elementen gebildeten Kühlvorrichtung versehen. Dadurch wird gewährleistet, dass die in den Vorratsbehältern des Dosierkopfes befindlichen Reagenzien über einen längeren Zeitraum stabil sind. Alternativ wird auch vorgeschlagen, ähnlich der Nachfüllstation, eine Kühlstation vorzusehen, in die der Dosierkopf mittels der Positionierungsvorrichtung bewegt werden kann. Dies ist insofern vorteilhaft, da die Masse des zu bewegenden Dosierkopfes gegenüber der Variante mit Kühlvorrichtung aufweisendem Dosierkopf erheblich reduziert und somit die Positionierungsvorrichtung entsprechend günstiger dimensioniert werden kann. Dabei wird der Dosierkopf nach Beendigung eines Färbedurchlaufs automatisch in die Kühlstation verfahren und die noch in den Vorratsbehättern des Dosierkopfes befindlichen Reagenzien werden zur Verlängerung Ihres Verwendungszeitraums gekühlt. Im Allgemeinen sind z.B. die für die ABC-Methode benötigten Primär- und Sekundärantiköper und das Tertiärreagenz in einer geeigneten Pufferlösung relativ stabil und können bei Kühlung über einen Zeitraum von 1 bis 4 Wochen bis 6 oder 12 Monaten aufbewahrt werden.

Bei einer erfindungsgemäßen Weiterbildung der Vorrichtung, welche keine Kühlvorrichtung am Dosierkopf oder eine Kühlstation, in die der Dosierkopf bewegt werden kann, aufweist, kann eine Ablass- bzw. Aufbewahrungsfunktion vorgesehen sein. In die vorzugsweise automatische Entleerungsstation kann der Dosierkopf mittels der Positioniereinrichtung zur Vollständigen Entleerung des Dosierkopfes und zur Einlagerung der aus dem Dosierkopf abgelassenen Restreagenzien verfahren werden. Dabei werden nach Beendigung eines Färbedurchlaufs und nach Entnahme der Objektträger aus der Vorrichtung vorzugsweise in die Objektträgeraufnahmen oder andere geeignete Aufnahmen (Trays) Vorratsbehältnisse eingesetzt, in welche eine vollständige Entleerung der noch in den Vorratsbehältern des Dosierkopfes befindlichen Reagenzien mit Hilfe der Dosierventile erfolgt. Vorzugsweise sind diese Behältnisse mit Identifrkationselementen, beispielsweise 1 D- oder 2D- Codes, versehen, die mittels des am Dosierkopf vorgesehenen Lesegerät ausgelesene werden können. Mit anderen Worten kann der Dosierkopf und/ oder die Dosierkopfhalterung eine Lesevorrichtung für auf den Objektträgern angebrachte Identifikationsmittel aufweisen. Damit wird sichergestellt, dass der Dosierkopf die Restreagenzien in die dafür vorgesehenen Vorratsbehältnisse abgibt. Im Anschluss daran können die Vorratsbehältnisse entnommen-und in einer separaten Kühlvorrichtung gelagert werden.

Bei der ABC- Methode bindet im ersten Schritt der Primär-Antikörper an das entsprechende Gewebe-Antigen. Geeignete Primärantikörper sind z.B.

| | |
|---|---|
| CyclinA (Novocastra Laboratories Ldt., Klon 6E6): | 1:50 |
| Hsp90 α/β (N-17, sc-1055, Santa Cruz Biotechnology, Inc.): | 1:150 |
| Jaw1 (E-19, sc-11688, Santa Cruz Biotechnotogy, Inc). | 1:150 |
| Ki-67(Clone Mib-1,DAKO Cytomation, M7240, Denmark): | 1:100 |

wobei die Verdünnung des Primär-Antikörpers auf die angegebene Konzentration z.B. mit "ChemMate" Antibody Diluent (z.B. DAKO Cytomation S 2022) erfolgt. Der entsprechend verdünnte Primärantikörper kann dann in die entsprechenden Reaktionszonen der Objektträger eindosiert werden. Die Reaktionszeit des Primär-Antikörpers beträgt z.B. 20 - 30 min.

Danach erfolgen ein oder mehrerer Spülschritte, an die sich jeweils vorzugsweise ein leichter Trocknungsvorgang anschließt, der jedoch nicht zur Austrocknung der Zell- oder Gewebeprobe in den Reaktionszonen führen darf.

Im nächsten Schritt erfolgt die Bindung eines biotinylierten Sekundär-Antikörpers an den primären Antikörper. Als Sekundär-Antikörper-Reagenzien seien beispielhaft genannt:
- Bei Maus-Primär-Antikörper (CyclinA):
   Goat-anti-Mouse IgG Plus (Biocare Medical, Cat# GM601 MMplus), gebrauchsfertig
- Bei Ziegen-Primär-Antikörper (HSP90 & Jaw1):
   Mouse-anti-Goat IgG (Jackson Immuno Research Laboratories Inc., 205-065-108), zu verdünnen mit ChemMate Antibody Diluent (DAKO Cytomation S 2022) auf 1:50

Die Reaktionszeit des Sekundär-Antikörpers beträgt z. B. 10 bis 20 min.

Im Anschluss an mehrerer Spül- und vorzugsweise nachfolgende Trocknungsschritte kann ein Biockierungsschritt erfolgen, bei dem die endogene Peroxidase-Aktivität nach dem Prinzip eines Überschusses an H₂O₂ bei fehlendem Elektronendonor mit: einem Peroxidazed Blocking Agent (Biocare Medical, Cat# PX968MM) blockiert wird. Die Reaktionszeit der Blockierungsreaktion beträgt z.B. 3 x 5 min.

Im Anschluss an mehrere Spül- und vorzugsweise nachfolgende Trocknungsschritte erfolgt dann das Ausbringen des vorgeformten Avidin-Biotin-Enzym-Komplexes als Tertiärreagenz (als Enzym verwendet: Meerrettich-Peroxidase/horseradish peroxidase (HRP) bzw. Alkalische Phosphatase (AP)) und dessen hochaffine Anlagerung an das Biotin-Molekül des Sekundär-Antikörpers.

Die Reaktionszeit des Tertiär-Reagenzes beträgt z.B. 10 bis 20 min.

Im Anschluss an mehrere Spül- und vorzugsweise nachfolgende Trocknungsschritte erfolgt dann die Inkubation mit einer chromogenen Substratlösung, wobei z.B. 3.3'-Diaminobenzidin-Tetrahydrochlorid (DAB) ( DAB Chromogen (Biocare Medical, Cat# DB851-60), bzw. Neufuchsin als Chromogen unter Bildung eines sichtbaren braunen bzw. roten Reaktionsproduktes verwendet werden können. Die Chromogen-Lösung kann vorzugsweise ein 'Puffermedium enthalten (z. B. DAB Substrate Buffer (Biocare Medical, Ref DS854MM; Chromogen zu Puffermedium im Verhältnis 1:20).

Die Reaktionszeit des Chromogens beträgt z.B. 5 - 10 min.

Im Anschluss an mehrerer Spül- und vorzugsweise nachfolgende Trocknungsschritte können die Reaktionszonen der Objektträger zur Beendigung der Färbereaktion mit Hämatoxylin (Reaktionszeit z.B. 1 min.) behandelt werden. Die Zell- und Gewebeproben in den Reaktionszonen der Objektträger können dann anschließend entwässert (aufsteigende Alkoholreihe: 70% - 70% - 96% - 100% Ethanol für jeweils 1 min) und mit Xylol behandelt werden. Die Objektträger können dann zur Aufbewahrung mit einem Deckel verschlossen werden.

Die beispielhaft beschriebenen Reagenzien und gewünschtenfalls weitere Reagenzien werden in gebrauchsfertiger Form in die Vorratsbehälter des Dosierkopfes gefültt, wobei die Reagenzien in den Vorratsbehältern vorzugsweise so angeordnet werden, dass ein zeitgleiches Dosieren von Reagenzien in Abhängigkeit von der jeweiligen Analyseaufgabe möglich ist. Dabei können die Reagenzien z.B. in 6-er Blöcken, d.h. z.B. in Reihen von 6 Antikörpern in definierter Abfolge, angeordnet werden, so dass sich sinnvolle Panels ergeben.

In der nachfolgenden Tabelle sind beispielhaft Zusammenstellungen von jeweils 6 Reagenzien (Antikörpern) in Panels angegeben, die in Färbealgorithmen aufeinander abgestimmt sind und vorteilhaft zur pathologischen Diagnostik des jeweils angegebenen Läsionen/ Tumors eingesetzt werden können.

| | | **kiz. B-Zell** | **Plasmo-** | | **Neuroendo** | **KM Ca** | **Mama Ca** | | |
|---|---|---|---|---|---|---|---|---|---|
| **Leukämien** | | **Lymphom** | **cytom** | | **krine** | | | | |
| **Vorläufer und I** | **II** | **I** | **II** | | **Tumore** | | **I** | **II** | **III** |
| | | | | | | | | | |
| CD3 | CD10 | CD5 | CD20 | | KL1 | KL1 (A1/A3) | CK7 | CK14 | CK5/6 |
| CD34 | CD14 | CD20 | CD38 | | NSE | ER/PR | p63 | CK5/8 | CK14 |
| CD79 | CD56 | CD23 | CD56 | | TTF1 | CK7+8 | ER | p53 | Calretinin |
| CD117 | KP1 | Kappa | Kappa | | MIB1 | CEAp | PR | HmFp | Synapto |
| MPO | Glyco | Lambda | Lambda | | Synapto | PSA | Her2neu | Cyclin d1 | |
| TdT | Lysozym | Cyclin D1 | | | Ceromo | S100 | E-Cadherin | gCDFP | |
| | | | | | | | | | |

Die angegebenen Abkürzungen sind übliche Bezeichnungen für kommerziell verfügbare Antikörper. Die Antikörper können ggf. in üblicher Weise verdünnt und in definierter Abfolge in Vorratsbehälter des Dosierkopfes eingefüllt werden. Das dadurch erhaltene algorithmische Panel kann zu einem separat handhabbaren Dosierkopfsegment verbunden werden, das getrennt von anderen Dosierkopfsegmenten in die Dosierkopfhalterung eingesetzt wird und so zu einem Dosierkopf vervollständigt wird. Um Verwechselungen zu vermeiden, werden die in Dosierkopfsegmenten zusammengefassten Panels vorzugsweise beschriftet bzw. mechanisch und/oder elektrisch codiert.

Weitere färbealgorithmische Panels können der unten angegebenen Tabelle 1 entnommen werden.

Die erfindungsgemäße Vorrichtung eignet sich in besonderer Weise zur Durchführung eines Verfahrens zur Dosierung von Reagenzien auf einen Objektträger bzw. in die Vertiefungen von Objektträgern.

Dazu werden die Objektträger in die Vorrichtung eingesetzt. Vorzugsweise werden die Objektträger außerhalb der Vorrichtung auf einem oder mehreren Tabletts angeordnet, und die Tabletts werden dann in die Vorrichtung eingesetzt. Die Objektträger werden vorzugsweise auf den Tabletts mit mechanischen Befestigungsmitteln, vorzugsweise einem mechanischen Befestigungssystem mit männlichen und weiblichen Befestigungselementen befestigt. Die Objektträger weisen vorzugsweise Beschriftungsfelder auf, auf denen Identifikationsmittel wie z.B. Etiketten mit 1 D- oder 2D- Codes, RPID-Chips oder dergleichen angebracht werden können. Die Ausrichtung der Objektträger ist dabei vorzugsweise immer gleich, so dass ein Blick des Anwenders genügt, um zu prüfen, ob alle Beschriftungsfelder der Objektträger in die gleiche Richtung zeigen.

Ob die Objektträger mit dem Schnitt nach oben und die Beschriftungsfelder der Objektträger alle in die gleiche Richtung zeigen, ist für den Anwender an dieser Stelle die einzige vorzunehmende Kontrolle. Die Reihenfolge der Objektträger auf erfindungsgemäßen Vorrichtung ist beliebig, da alle Objektträger zunächst über den integrierten Scanner ausgelesen werden. Damit kann die Vorrichtung auch sofort überprüfen, ob eventuell ein Objektträger aufgelegt wurde, zu dem aktuell kein Panel mit Reagenzien (im Dosierkopf) passt. Eine falsche Verarbeitung dieses Objektträgers ist somit ausgeschlossen. Weiter kann ggf. ein optimierter Verfahrweg für den Dosierkopf errechnet werden.

Das Verfahren umfasst weiterhin die Befüllung der Vorratsbehälter des Dosierkopfes mit den geeigneten Reagenzien. Die Befüllung des Dosierkopfes mit den jeweiligen Reagenzien erfolgt dabei in einer automatischen Befüllungsstation, in die der Dosierkopf mit den teilweise oder vollständig entleerten Vorratsbehältern mittels der Positionierungseinrichtung verfahren werden kann. Der Dosierkopf wird dann an dem Positionierungssystem, weiches vorzugsweise als kartesisches System ausgebildet ist, befestigt bzw. in die an dem Positionierungssystem befestigte Dosierkopfhalterung eingesetzt. Der Dosierkopf bzw. die Dosierkopfhalterung weisen vorzugsweise eine Kühlvorrichtung auf, die z.B. von Peltier-Elementen gebildet wird. Wenn die Vorrichtung eine Nachfüllstation für die Reagenzien umfasst, an der der Dosierkopf nach dessen Entleerung wieder befüllt werden kann, wird diese ebenfalls mit den Reagenzien befüllt. Dabei werden vorzugsweise sowohl die Vorratsbehälter des Dosierkopfes als auch die Vorrats behälter der Nachfüllstation mit Identifikationsmitteln versehen, um die automatische Steuerung der Analyse, d.h. der Eindosierung der Reagenzien in die Vertiefungen bzw. die Reaktionszonen, und die Wiederbefüllung des Dosierkopfes durch die Software steuern zu können. Es wird weiterhin vorzugsweise sichergestellt, dass das Reagenzien-Volumen in dem Dosierkopf bzw. in der Nachfüllstation mit der Gesamtzahl an Reaktionszonen korreliert.

Nach Abschluss dieser Vorbereitungen wird der Analyse-Durchlauf gestartet. Hierzu fährt der Dosierkopf mit dem Lesegerät für die Identifikationsmittel vorzugsweise zunächst die Objektträger ab, um die Information auf den Identifikationsmitteln abzulesen und um die Position der Objektträger und der von ihnen bereitgestellten Vertiefungen/ Reaktionszonen aufzunehmen.

Danach beginnt der Dosierkopf damit, Reagenzien in die Vertiefungen/Reaktionszonen einzudosieren, wobei das Volumen des zudosierten Reagenzes kleiner ist als das Volumen der Vertiefung/ Reaktionszone. Dabei arbeitet der Dosierkopf dann vorzugsweise die durch die jeweilige Analyse-Methode wie z.B. die oben beschriebene ABC-Methode vorgegebene Sequenz an Reaktionsschritten mit dazwischen geschalteten Spülschritten etc. ab.

Das Verfahren umfasst vorzugsweise weiterhin einen Schritt, bei dem die Objektträger bzw. die darauf befindlichen Vertiefungen/ Reaktionszonen mit einer Abdeckfolie abgedeckt werden, um diese für nachfolgende Analyseschritte wie z.B. mikroskopische Analysen zu schützen.

### Kurze Beschreibung der Figuren

Eine spezielle Ausführungsform der erfindungsgemäßen Vorrichtung sowie des Dosierkopfes wird anhand der beifügten Figuren beschrieben, wobei
- Fig. 1: eine Draufsicht auf einen erfindungsgemäß verwendbaren Objektträger,
- Fig. 2: eine Querschnittsansicht des Objektträgers aus Fig. 1 längs der dort gestrichelt eingezeichneten Linie A - A,
- Fig. 3: eine perspektivische Gesamtansicht einer erfindungsgemäßen Vorrichtung mit geschlossenem Deckel,
- Fig. 4: eine perspektivische Gesamtansicht der Vorrichtung gemäß Fig. 3 mit geöffnetem Deckel,
- Fig. 5: eine perspektivische Gesamtansicht des Dosierkopfes der Vorrichtung gemäß den Figuren 3 und 4,
- Fig. 6: eine perspektivische Detailansicht des Dosierkopfes gemäß Fig. 5 zeigt,
- Fig. 7: eine weitere perspektivische Gesamtansicht des Dosierkopfes, und
- Fig. 8: eine Ansicht des Dosierkopfes von unten.

### Detaillierte Beschreibung der Figuren

Der in Fig. 1 gezeigte Objekitrager 50 weist Vertiefungen 52 mit einer quadratischen Querschnittfläche auf, die in einer regelmäßigen 3 x 6-Matrix angeordnet sind. Die Vertiefungen 52 sind in den 3er-Reihen und den 6-er Spalten jeweils äquidistant angeordnet, wobei der Abstand zwischen den Reihen größer ist als zwischen den Vertiefungen 52 in einer Reihe selbst. Die Vertiefungen 52 sind jeweils mit einer Gewebe- oder Zellprobe 53, 53a, 53b versehen. Die Vertiefungen 52 bilden dabei die Reaktionszonen 58. Der Objektträger 50 weist an einem Ende ein Beschriftungsfeld 51 auf, in dem z.B. ein den Objektträger 50 i-dentifizierendes 1 D- oder 2D-Code-Etikett aufgeklebt werden kann.

Fig. 2 ist eine Querschnittsansicht durch eine Reaktionszone 58 entlang der in Fig. 1 gestrichelt eingezeichneten Linie A - A. Dabei ist in Fig. 1 eine quadratische Vertiefung 52 ohne eine Gewebe- oder Zellprobe 53 gezeigt, während in Fig. 2 zur Verdeutlichung eine Gewebe- oder Zellprobe 53 eingezeichnet ist. Die Gewebe- oder Zellprobe 53 befindet sich auf einer Trägerfolie 56 aus einer Polycarbonatfolie und ist mit einem Kleber auf die Basisplatte 55 des Objektträgers 50 aufgeklebt. Der Objektträger 50 ist beispielsweise mit einem aufgespritzten Rahmen aus einem hydrophoben Material, einer Teflonfolie oder einer Folie aus einem anderen hydrophoben Material (Bezugszeichen 54) beschichtet, in die die Vertiefungen 52 bzw. die Reaktionszonen 58 eingelassen sind. Der Rahmen bzw. die Folie 54 weist eine Dicke d2 auf, die größer ist als die Summe d1 der Dicken der Zell- oder Gewebeprobe 53 und der Trägerfolie 56, sodass die Gewebe- oder Zellprobe sich innerhalb der Vertiefung 52 befindet und dort mit Reagenzien beaufschlagt werden kann, ohne dass es zu einer Kontamination von benachbarten Vertiefungen 52 kommt. Das Verhältnis aus den Abmessungen d2/d1 ist vorzugsweise mindestens 1,2, insbesondere mindestens 1,3 und besonders bevorzugt nicht kleiner als 1,4. Vorzugsweise übersteigt das Volumen der Vertiefung die Summe der das Volumina aus Gewebe- oder Zellprobe 53 und Trägerfoliensegment 56 mindestens um das 1,5-fache und besonders bevorzugt mindestens um das 2-fache.

Gewünschtenfalls kann der Objektträger 50 vor Beginn der Reaktionen mit einer Abdeckfolie 57 (mit der Dicke d3) versehen sein, um sicherzustellen, dass die Zell- oder Gewebeprobe 53 nicht austrocknet. Die Abdeckfolie 57 wird vor der Durchführung der Nachweisreaktionen entfernt.

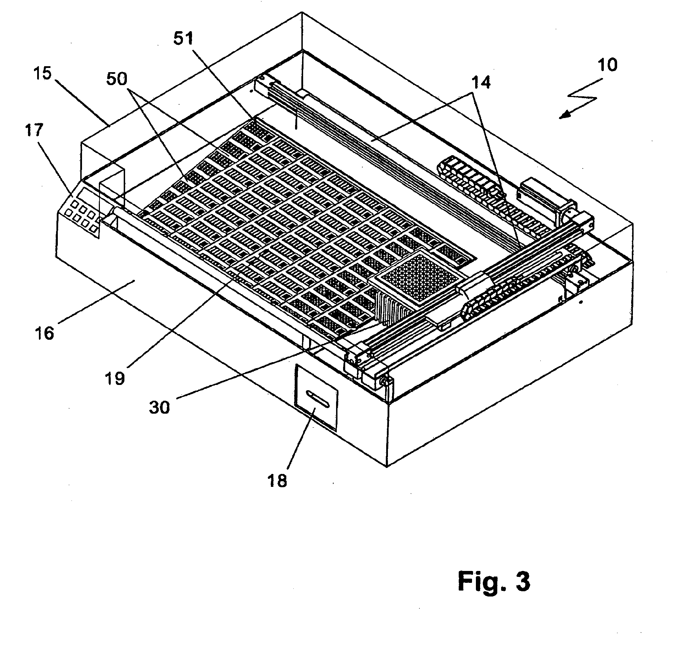

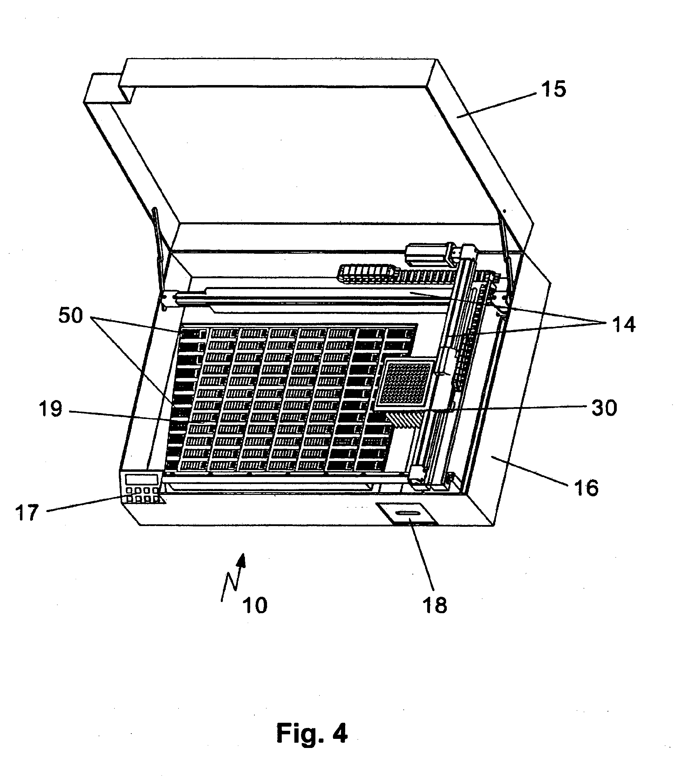

Fig. 3 und Fig. 4 zeigen perspektivische Gesamtansichten einer beispielhaften Ausgestaltung einer erfindungsgemäßen Vorrichtung 10. Die Vorrichtung 10 ist mit einer Vielzahl von Objektträgern 50 beladen, die in einer regelmäßigen Matrix (12 Zeilen x 8 Spalten) angeordnet sind. Die zwölf Objektträger 50 einer Spalte sind jeweils auf einem leistenförmigen Tablett 51 befestigt. Das eine Ende des Tabletts 51 ist absenkbar ausgestaltet und taucht in abgesenktem Zustand in die Spülwanne ein, die sich unter den in einer Ebene angeordneten Objektträgern 50 befindet. Die Spülwanne befindet sich in dem Gehäuse der Vorrichtung 10 und ist in den Fig. 3 und 4 nicht zu sehen.

Hinter der Klappe 18 befinden sich die Anschlüsse für die Zu- und Ableitung der Spülflüssigkeit. Die Vorrichtung 10 kann oben mit einer transparenten Abdeckung 15 verschlossen werden, wodurch in dem Reaktionsraum 19 oberhalb der Ebene der Objektträger 50 ein Feuchtraum erzeugt wird, durch den eine kontinuierliche Befeuchtung der Zell- oder Gewebeproben 53 in den Reaktionszonen der Objektträger 50 sichergestellt wird. Die Abdeckung 15 ist in Fig. 3 in geschlossenem und in Fig. 4 in geöffnetem Zustand gezeigt.

Die Vorrichtung 10 weist weiterhin einen Dosierkopf 30 auf, der an einem Arm eines kartesischen X/Y-Positionierungssystems 14 angeordnet ist und dadurch über den Objektträgern 50 positioniert werden kann. Die beiden Arme des kartesischen Systems 14 sind jeweils auf zwei Seiten gelagert, wodurch ein robustes Positionierungssystem erhalten wird. Die Bedienung der Vorrichtung erfolgt über das Bedienungs-Panel 17.

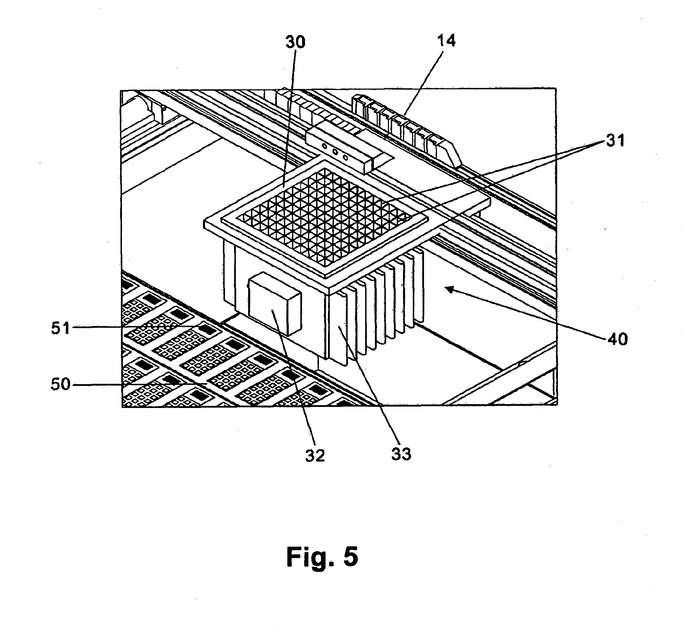

Fig. 5 zeigt eine perspektivische Darstellung des Dosierkopfes 30, der in eine Dosierkopfhalterung 40 eingesetzt ist, die an einem Arm des kartesischen X/Y-Positionierungssystems 14 befestigt ist. Der Dosierkopf enthält eine Vielzahl von Vorratsbehältern 31, die eine quadratische Querschnittsfläche aufweisen und in einer quadratischen Matrix (11 x 11) angeordnet sind. Die Halterung 40 des Dosierkopfes 30 ist mit Peltier-Kühlelementen 33 ausgerüstet und weist an der dem Reaktionsraum 19 zugewandten Seite einen Barcode-Leser 32 auf, mit dem die in den Beschriftungsfeldern 51 der Objektträger 50 angeordneten Barcode-Etiketten gelesen werden können.

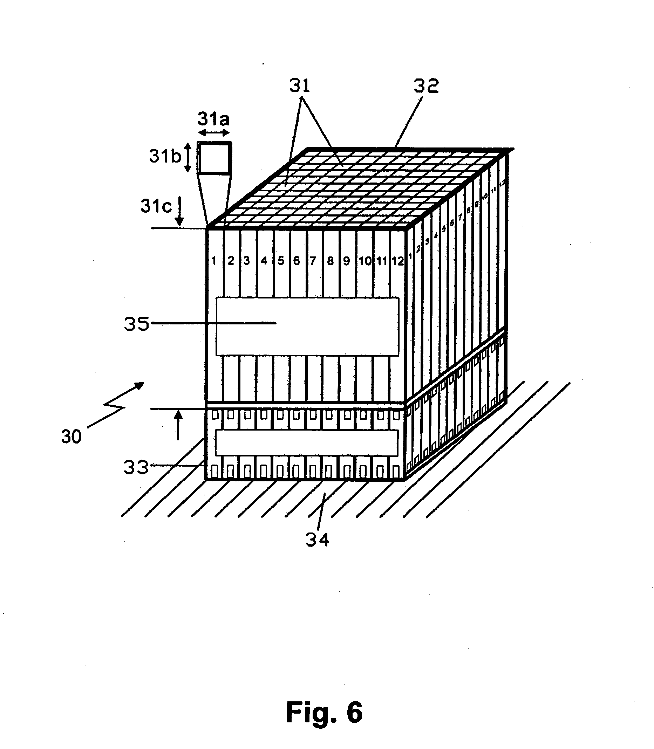

Fig. 6 zeigt den prinzipiellen Aufbau des Dosierkopfes 30 mit quadratischen Vorratbehältem 31, die in einer quadratischen 12 x 12-Matrix angeordnet sind. Der Dosierkopf 30 umfasst insgesamt 144 Vorratsbehälter 31, die jeweils einen quadratischen Querschnitt und das gleiche Volumen aufweisen. Die einzelnen Vorratbehälter 31 an den beiden Seiten des Dosierkopfs sind jeweils mit den Zahlen 1 bis 12 durchnumeriert. In der gezeigten Detailansicht ist die quadratische Querschnittsfläche eines Vorratsbehälters 31 mit den Seitenlängen 31a, 31b gezeigt. Am gegenüberliegenden Ende eines jeden Vorratsbehälters 31 ist ein Dosierventil 33 angeordnet. Die Dosierventile 33 sind in einem Dosierblock zusammengefasst. Die Dosierventile 33 haben eine Auslassvorrichtung für die in den jeweiligen Vorratsbehältern befindlichen Reagenzien. An die Dosierventile 33 schließt sich ein Block von Durchflusssensoren 34 zur Dosierkontrolle an. Die Höhe der Vorratsbehälter 31 zwischen den oberen, offenen Enden, die mit einem gasdichten Deckel 32 versehen sind, und den in einem Dosierblock 30 angeordneten Dosierventilen 33 ist mit 31c bezeichnet.

Die Vorratsbehälter 31 sind an dem den Dosierventilen 33 gegenüberliegenden Ende mit einem gasdichten Deckel versehen, wobei der Anschluss für die Gasleitung in der schematischen Darstellung der Fig. 6 nicht gezeigt ist. Mit Hilfe des gasdichten Deckels 32 können die Vorratsbehälter 31 z.B. mit Druckluft oder einem Inertgas beaufschlagt werden. Unterhalb des Dosierventilblockes befindet sich der Block 34 mit den Durchflusssensoren zur Durchfluss- bzw. Dosierkontrolle.

Der Dosierblock 30 weist ein Beschriftungsfeld 35 auf, um das Wechseln von Dosierköpfen 30 in der Dosierkopfhalterung 40 zu erleichtern. In einer beispielhaften Dimensionierung weist der Vorratsbehälter der Fig. 6 Seitenlängen 31a, 31b von jeweils 9 mm und eine Höthe 31c von etwa 45 mm aus. Damit ergibt sich ein Volumen von etwa 3,6 ml pro Vorratsbehälter 31 und ein Gesamtvolumen des Dosierkopfes 30 von etwa 525 ml.

Wie in Fig. 6 gezeigt ist, ist der Dosierkopf 30 als 'Sandwich' mit wechselbaren Platten bzw. Blöcken aufgebautund ist aus einem abdichtenden Deckel 32, einem zu einer Einheit zusammengefassten Block aus Vorratsbehältern 31, einen Block aus Dosierventilen 34 und/oder einen Block aus Durchflusssensoren aufweisen. Dies erlaubt eine hohe Wartungsfreundlichkeit und eine Modularität für eventuelle Erweiterungen.

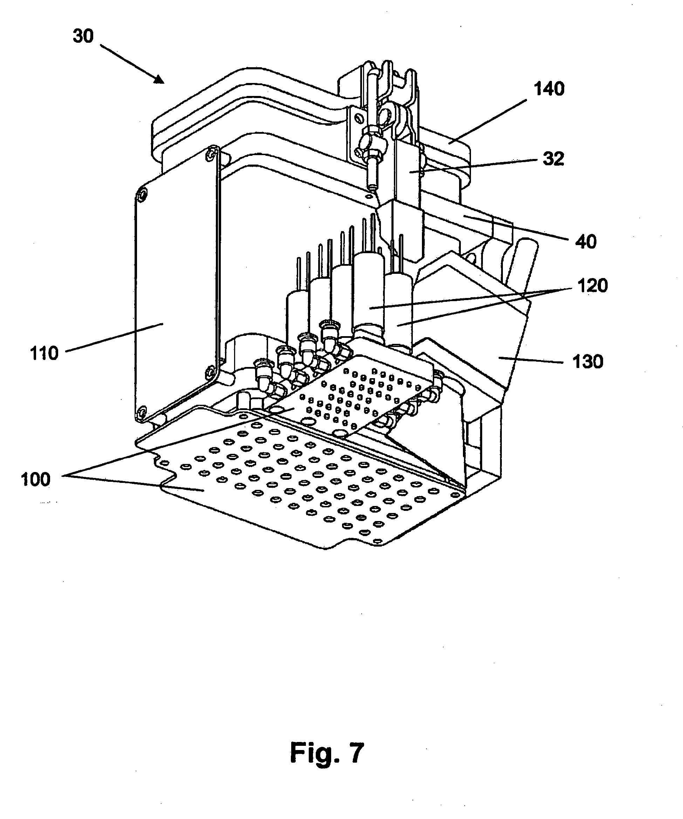

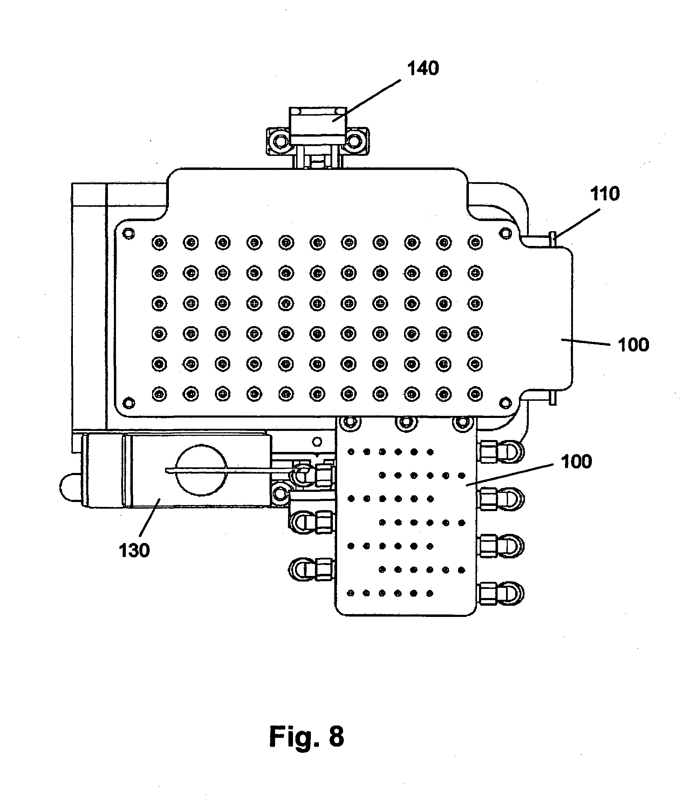

Der in den Fig. 7 und Fig. 8 gezeigte Dosierkopf 30 ist in die Dosierkopfhalterung 40 eingesetzt. Der Dosierkopf 30 enthält neben der Dosierkontrolle 100 auch eine Elektronik 110 für die Ansteuerung der Ventile des Dosierkopfs 30 und die Ansteuerung der zusätzlich erforderlichen Ventile 120 für die Flüssigkeiten, welche in größeren Mengen je Objektträger 50 verbraucht werden. Weiter enthält die Elektronik 110 auch einen Drucksensor für die Überwachung des Systemdruckes (nicht gezeigt). Der in Fig.7 und Fig. 8 gezeigte Scanner 130 dient der Erkennung und Auswertung der auf den Objektträgern 50 angeordneten 2D-Codes. Der Deckel 32 ist mit einer im oberen Bereich beidseitig angeordneter Verschlussmechanik 140 in seiner geschlossenen Position gegen ungewolltes Öffnen gesichert.

**Tabelle 1: Färbealgorithmische Panels zur pathologischen Diagnostik der angegebenen Karzinome**

| **Vorläufer und** | | **klz. B-Zell** | **Plasmo-** | | **k. T-Zell** | **Hodgkin** | **NLPHD** |
|---|---|---|---|---|---|---|---|
| **Leukämien** | | **Lymphom** | **cytom** | | **Lymphom** | | |
| | | | | **klz.Bly +Pz** | | | |
| **I** | **II** | **I** | **II** | **I+II** | | | |
| | | | | | | | |
| CD3 | CD10 | CD5 | CD20 | CD5 | CD3 | CD15 | CD3 |
| CD34 | CD14 | CD20 | CD38 | CD10 | CD4 | CD20 | CD23 |
| CD79 | CD56 | CD23 | CD56 | CD20 | CD8 | CD30 | CD57 |
| CD117 | KP1 | Kappa | Kappa | CD23 | CD56 | LMP1 | EMA |
| MPO | Glyco | Lambda | Lambda | CD38 | CD57 | | TIA |
| TdT | Lysozym | Cyclin D1 | | CD56 | TIA | OPD4 | OCT2 |
| | | | | CD79 | | | |
| (*CD1a*) | | | | Kappa | | *(CD2)* | *(CD2)* |
| *(CD5)* | | | | Lambda | | *(TIA)* | *(TIA)* |
| *(CD7)* | | | | Cyclin D1 | | *(EMA)* | *(EMA)* |
| *(CD19)* | | | | MIB | | | |
| *(CD22)* | | | | TdT | | | |
| *(CD33)* | | | | | | | |
| *(CD99)* | | | | *(CD25)* | | | |
| *(CD123)* | | | | *(TRAP*) | | | |
| *(IgM)* | | | | *(IgD)* | | | |
| *(PAX)* | | | | *(DBA44)* | | | |
| | | | | | | | |

| **Hg-B** | | **Hg-T** | | **Histocytic-** | **unknown** | | |
|---|---|---|---|---|---|---|---|
| | | | | **tumor** | **Tumor** | **Ca** | |
| **I** | **II** | **I** | **II** | | | **I** | **II** |
| | | | | | | | |
| CD5 | CD23 | CD3 | CD2 | CD1a | CD38 | KL1+AE1/3 | CDX2 |
| CD10 | CD30 | CD4 | CD8 | CD23 | GD45 | CK5+6 | CEA |
| CD20 | CD79 | CD20 | CD56 | S100 | CD56 | CK10+13 | CA19.9 |
| MIB | OCT2 | CD30 | TIA | KP1 | CD138 | TTF1 | CA12.5 |
| bcl2 | IgM | MIB | Granzym | Lysozym | VIM | CK7+8 | Calretinin |
| | | ALK | Lysozym | | S100ß | ER+PR | Synapto |
| | | | | | KL1 | | |
| *(FBER)* | *(EBER)* | *(alpha*/*beta)* | *(alpha*/*beta)* | *(EBER)* | | (CD14) | |
| | | | | | | | |
| | | | | | | | |
| | | | | | | *(Her2neu)* | *(Her2neu)* |
| | | | | | | | |
| | | | | | | | |

| **Neuroendo** | **KM Ca** | **Mama Ca** | | **Keimzell** | **Sarcome** | | **Neurogene** |
|---|---|---|---|---|---|---|---|
| **krine Tumore** | | | | **Tumoren** | | | **Tumoren** |
| | | **I** | **II** | | **I** | **II** | |
| | | | | | | | |
| KL1 | KL1(P1/A3) | CK7 | CK14 | CD30 | CD34 | CD31 | GFAP |
| NSE | ER | p63 | CK5/6 | AFP | CD99 | EMA | MIB1 |
| TTF1 | PR | ER | p53 | PLAP | CD117 | Demin | S100 |
| MIB1 | CEAp | PR | HmFg | EMA | S100 | smActin | MAP |
| Synapto | PSA | Her2neu | Cyclin d1 | KL1 | VIM | Myogenin | EMA |
| Ceromo | S100 | E-cadherin | gCDFP | Inhibin | KL1 (AE1/3) | Calretinin | PR |
| | CK7+8 | CK5/6 | Synapto | CD117 | | | |
| | | CK14 | | | | | |
| | | Calretinin | | | | | |
| | | | | | | | |
| | | *(Her2neu)* | *(Her2neu)* | (*NSE*) | | | |

## Patentansprüche

1. Dosierkopf (30) zur Verwendung in einer automatischen Färbe-Vorrichtung (10) für Reihenuntersuchungen im Gesundheitswesen zur Dosierung von Reagenzien auf einer Vielzahl von Objektträgern (50), umfassend eine Vielzahl von Vorratsbehältern (31), welche zur Aufnahme von flüssigen Reagenzien geeignet sind und an einem Ende ein Dosierventil (33) zur Dosierung und Aufbringung der Reagenzien auf die Objektträger (50) aufweisen, wobei die Vorratsbehälter (31) an dem den Dosierventilen (33) gegenüberliegenden Ende eine Abdeckung (32) aufweisen und der Dosierkopf (30) aus wechselbaren Platten oder Blöcken aufgebaut ist, wobei die Abdeckungen (32), Vorratsbehälter (31) und/ oder Dosierventile (33) jeweils einen zu einer Einheit zusammengefassten Block bilden, **dadurch gekennzeichnet, dass** die Abdeckung (32) eine gasdichte Abdeckung (32) ist, wobei die Abdeckung (32) einen mit Einlassventilen versehenen Anschluss zur Anlegung eines Gasüberdrucks aufweist, und das mittlere Volumen der Vorratsbehälter (31) mindestens 2,5 ml ist.

2. Dosierkopf nach Anspruch 1, wobei der Auslass der Dosierventile (33) über den Löchern einer Lochplatte angeordnet ist.

3. Dosierkopf nach einem der Ansprüche 1 oder 2, wobei der Dosierkopf (30) eine Dosierkontrolle zur Messung des Volumens der abdosierten Reagenzien aufweist, wobei die Dosierkontrolle vorzugsweise aus optischen Durchflusssensoren (34) oder einem kapazitiven Durchflussmesssystem gebildet ist.

4. Dosierkopf nach Anspruch 3, wobei die Durchflusssensoren (34) als zu einer Einheit zusammengefasster Block ausgebildet sind.

5. Dosierkopf nach einem der Ansprüche 1 bis 4, wobei der Dosierkopf eine Halterung zur Aufnahme von flüssigkeits- und insbesondere Nachweisreagenzien wie Sekundär- und/ oder Tertiärreagenzienführenden Leitungen aufweist, wobei die Halterung vorzugsweise Dosierventile und/ oder eine Dosierkontrolle aufweist.

6. Dosierkopf nach einem der Ansprüche 1 bis 5, wobei ein oder mehrere Dosierköpfe (30) derart ausgebildet sind, dass sie lösbar in eine Dosierkopfhalterung (40) der automatischen Vorrichtung (10) zur Dosierung von Reagenzien auf einer Vielzahl von Objektträgern (50) einsetzbar sind.

7. Dosierkopf nach einem der Ansprüche 1 bis 6, wobei der Dosierkopf eine Lesevorrichtung für auf den Objektträgern (50) angebrachte Identifikationselemente enthält

8. Automatische Färbe-Vorrichtung (10) für Reihenuntersuchungen im Gesundheitswesen zur Dosierung von Reagenzien auf eine Vielzahl von Objektträgern (50) umfassend Haltevorrichtungen für eine Vielzahl von Objektträgern (50), welche jeweils eine Vielzahl von voneinander abgegrenzten Vertiefungen (52) enthalten, die zur Aufnahme von Zell- oder Gewebeproben (53) geeignet sind,
einen Dosierkopf (30) nach einem der Ansprüche 1 bis 7 mit einer Vielzahl von Vorratsbehältern (31), welche zur Aufnahme von flüssigen Reagenzien geeignet sind und an dem den Vertiefungen (52) zugewandten Ende ein Dosierventil (33) zur Dosierung und Aufbringung der Reagenzien in die Vertiefungen (52) aufweisen, und
eine Positionierungsvorrichtung (14) zur Positionierung der Vorratsbehälter (31) des Dosierkopfes (30) über den jeweiligen Vertiefungen (52) der Objektträger (50).

9. Vorrichtung nach Anspruch 8, wobei die Objektträger (50) abnehmbar auf einem oder mehreren Tabletts (51) angeordnet sind.

10. Vorrichtung nach Anspruch 8 oder 9, wobei die Tabletts (51) abnehmbar in die Vorrichtung (10) eingesetzt werden können.

11. Vorrichtung nach einem der Ansprüche 8 bis 10, wobei die Vorratsbehälter (31) so dimensioniert sind, dass mindestens drei, vorzugsweise sechs benachbarte Vertiefungen (52) simultan von Vorratsbehältern (31) mit Nachweisreagenzien beaufschlagt werden können.

12. Vorrichtung nach einem der Ansprüche 8 bis 11, wobei der Auslass der Dosierventile (33) über den Löchern einer Lochplatte angeordnet ist.

13. Vorrichtung nach einem der Ansprüche 8 bis 12, wobei der Dosierkopf (30) Durchflusssensoren (34) zur Messung des Volumens der abdosierten Reagenzien umfasst.

14. Vorrichtung nach einem der Ansprüche, 8 bis 13 wobei die Vorrichtung (10) eine Dosierkopfhalterung (40) enthält, in die eine oder mehrere Dosierköpfe (30) einsetzbar sind.

15. Vorrichtung nach einem der Ansprüche 8 bis 14, wobei die Vorrichtung (10) eine unter den Objektträgern (50) angeordnete Spülwanne zur Aufnahme einer Spülflüssigkeit umfasst.

16. Vorrichtung nach einem der Ansprüche 8 bis 15, wobei ein Objektträger (50) einzeln oder zusammen mit anderen Objektträgern (50) von einer ersten, zur Einbringung der Reagenzien in die Vertiefung (52) geeigneten Position in eine zweite, in der Spülwanne befindliche Position überführbar ist.

17. Vorrichtung nach Anspruch 16, wobei das die Objektträger tragenden Tablett (51) einzeln oder zusammen mit weiteren Tabletts (51) von einer ersten, zur Durchführung der Nachweisreaktionen geeigneten Position in eine zweite, in der Spülwanne befindliche Position überführbar ist.

18. Vorrichtung nach einem der Ansprüche 8 bis 17, wobei die Vorrichtung (10) eine vorzugsweise automatische Befüllungsstation aufweist, in die der Dosierkopf (30) mit den teilweise oder vollständig entleerten Vorratsbehältern (31) mittels der Positioniereinrichtung (14) verfahren werden kann, um die Vorratsbehälter (31) mit den jeweiligen Reagenzien zu befüllen.

19. Verfahren zur Dosierung von Reagenzien auf eine Vielzahl von Objektträgern (50), wobei eine automatische Färbe-Vorrichtung (10) für Reihenuntersuchungen im Gesundheitswesen nach einem der Ansprüche 8 bis 18 verwendet wird, worin
die Objektträger (50) in die Vorrichtung (10) eingesetzt werden,
die Vorratsbehälter (31), die als zu einer Einheit zusammengefasster Block ausgebildet sind und an dem den Dosierventilen (33) gegenüberliegenden Ende die gasdichte Abdeckung (32) aufweisen, wobei die Abdeckung (32) einen mit Einlassventilen versehenen Anschluss zur Anlegung eines Gasüberdrucks aufweist, mit Reagenzien befüllt werden,
der Dosierkopf (30) mit Hilfe der Positionierungsvorrichtung (14) einander benachbarte Vorratsbehälter (31) über wenigstens drei benachbarte Vertiefungen (52) des Objektträgers (50) positioniert, und
die Reagenzien in die Vertiefungen (52) eindosiert werden, wobei das Volumen des Reagenz kleiner ist als das Volumen der Vertiefung (52), wobei mindestens drei benachbarte Vertiefungen (52) der Objektträger (52) simultan von Vorratsbehältern (31) mit Reagenzien beaufschlagt werden.

20. Verfahren nach Anspruch 19 worin die Objektträger (52) mit Identifikationselementen gekennzeichnet sind und der Dosierkopf (30) oder die Dosierkopfhalterung (40) der Vorrichtung ein Lesegerät zum Lesen der Identifikationselemente beinhaltet, wobei der Dosierkopf (30) die Objektträger (50) vor Beginn der Abdosierung der Reagenzien abfährt, um die Information auf den Identifikationsmitteln abzulesen und um die Position der Objektträger (50) und der von den Objektträgern (50) bereitgestellten Vertiefungen (52) aufzunehmen.

## Claims

1. A metering head (30) for use in an automatic dyeing apparatus (10) for mass screening in the healthcare system for metering reagents on a plurality of object carriers (50), comprising a plurality of storage containers (31) which are suitable for receiving liquid reagents and have at one end a metering valve (33) for the metering and application of the reagents to the object carriers (50), wherein the storage containers (31) have a covering (32) at the end opposite the metering valves (33) and the metering head (30) is formed from exchangeable plates or blocks, wherein the coverings (32), the storage containers (31) and/or the metering valves (33) form in each case a block combined into a unit, **characterized in that** the covering (32) is a gas-tight covering (32), wherein the covering (32) has a connection provided with inlet valves for the application of a gas over-pressure, and the average volume of the storage containers (31) is at least 2·5 ml.

2. A metering head according to Claim 1, wherein the outlet of the metering valves (33) is arranged above the holes of a perforated plate.

3. A metering head according to one of Claims 1 or 2, wherein the metering head (30) has a metering control means for measuring the volume of the reagents metered, wherein the metering control means is preferably formed from optical through-flow sensors (34) or a capacitive through-flow measurement system.

4. A metering head according to Claim 3, wherein the through-flow sensors (34) are designed in the form of a block combined into a unit.

5. A metering head according to any one of Claims 1 to 4, wherein the metering head has a holding means for receiving liquid reagents, and in particular detection reagents, such as secondary- and/or tertiary-reagent-conveying lines, wherein the holding means preferably has metering valves and/or a metering control means.

6. A metering head according to any one of Claims 1 to 5, wherein one or more metering heads (30) are formed in such a way that they are capable of being inserted in a releasable manner into a metering-head holding means (40) of the automatic apparatus (10) for metering reagents on a multiplicity of object carriers (50).

7. A metering head according to any one of Claims 1 to 6, wherein the metering head comprises a reading apparatus for identification elements attached to the object carriers (50).

8. An automatic dyeing apparatus (10) for mass screening in the healthcare system for the metering of reagents on a multiplicity of object carriers (50), comprising
holding apparatus for a plurality of object carriers (50), which comprise in each case a plurality of depressions (52) which are bounded off from one another and which are suitable for receiving cell or tissue samples (53),
a metering head (30) according to any one of Claims 1 to 7 with a plurality of storage containers (31) which are suitable for receiving liquid reagents and have at the end facing the depressions (52) a metering valve (33) for the metering and application of the reagents into the depressions (52), and
a positioning apparatus (14) for positioning the storage containers (31) of the metering head (30) above the respective depressions (52) of the object carriers (50).

9. An apparatus according to Claim 8, wherein the object carriers (50) are arranged in a removable manner on one or more tablets (51).

10. An apparatus according to Claim 8 or 9, wherein the tablets (51) can be inserted into the apparatus (10) in a removable manner.

11. An apparatus according to any one of Claims 8 to 10, wherein the storage containers (31) are dimensioned in such a way that at least three, and preferably six, adjacent depressions (52) can be acted upon simultaneously with detection reagents by storage containers (31).

12. An apparatus according to any one of Claims 8 to 11, wherein the outlet of the metering valves (33) is arranged over the holes of a perforated plate.

13. An apparatus according to any one of Claims 8 to 12, wherein the metering head (30) has through-flow sensors (34) for measuring the volume of the metered reagents.

14. An apparatus according to any one of Claims 8 to 13, wherein the apparatus (10) has a metering-head holding means (40) into which one or more metering heads (30) are capable of being inserted.

15. An apparatus according to any one of Claims 8 to 14, wherein the apparatus (10) comprises a rinsing tank arranged under the object carriers (50) for receiving a rinsing liquid.

16. An apparatus according to any one of Claims 8 to 15, wherein one object carrier (50) is capable of being transferred individually or together with other object carriers (50) from a first position suitable for the introduction of the reagents into the depression (52) into a second position present in the rinsing tank.

17. An apparatus according to Claim 16, wherein the tablet (51) carrying the object carriers is capable of being transferred individually or together with further tablets (51) from a first position suitable for carrying out the detection reactions into a second position present in the rinsing tank.

18. An apparatus according to any one of Claims 8 to 17, wherein the apparatus (10) has a preferably automatic filling station into which the metering head (10) can be moved with the partially or completely emptied storage containers (31) by means of the positioning device (14) in order to fill the storage containers (31) with the respective reagents.

19. A method of metering reagents onto a plurality of object carriers (50), wherein an automatic dyeing apparatus (10) for mass screening in the healthcare system is used according to any one of Claims 8 to 18, in which
the object carriers (50) are introduced into the apparatus (10),
the storage containers (31), which are designed in the form of a block combined into a unit and which have the gas-tight covering (32) at the end opposite the metering valves (33), wherein the covering (32) has a connection provided with inlet valves for the application of a gas over-pressure, are filled with reagents,
the nozzle head (30) positions with the aid of the positioning apparatus (14) storage containers (31) adjacent to one another by way of at least three adjacent depressions (52) in the object carrier (50), and
the reagents are metered into the depressions (52), wherein the volume of the reagent is smaller than the volume of the depression (52), wherein at least three adjacent depressions (52) in the object carriers (50) are acted upon simultaneously with reagents by storage containers (31).

20. A method according to Claim 19, in which the object carriers (52) [sic] are designated with identification elements and the metering head (30) or the metering-head holding means (40) of the apparatus contains a reading appliance for reading the identification elements, wherein the metering head (30) removes the object carriers (50) before the beginning of the metering of the reagents in order to read off the information on the identification means and to record the position of the object carriers (50) and the depressions (52) made available by the object carriers (50).

## Revendications

1. Tête de dosage (30) destinée à être utilisée dans un dispositif de coloration automatique (10) pour des examens en série dans le domaine de la santé, pour le dosage de réactifs sur une pluralité de supports d'objets (50), comprenant une pluralité de réservoirs (31), qui sont adaptés au logement de réactifs liquides et comprenant, à une extrémité, une soupape de dosage (33) pour le dosage et l'application des réactifs sur les supports d'objets (50), les réservoirs (31) comprenant, au niveau de l'extrémité opposée aux soupapes de dosage (33), un couvercle (32) et la tête de dosage (30) étant constituée de plaques ou de blocs interchangeables, les couvercles (32), les réservoirs (31) et/ou les soupapes de dosage (33) constituant chacun un bloc regroupé en une unité, **caractérisée en ce que** le couvercle (32) est un couvercle étanche aux gaz (32), le couvercle (32) comprenant un raccord muni de soupapes d'admission pour l'application d'une surpression de gaz et le volume moyen des réservoirs (31) est d'au moins 2,5 ml.

2. Tête de dosage selon la revendication 1, la sortie des soupapes de dosage (33) est disposée au-dessus des trous d'une plaque perforée.

3. Tête de dosage selon l'une des revendications 1 ou 2, la tête de dosage (30) comprenant un dispositif de contrôle de dosage permettant de mesurer le volume des réactifs dosés, le dispositif de contrôle de dosage étant constitué, de préférence, de capteurs de débit optiques (34) ou d'un système de mesure de débit capacitif.

4. Tête de dosage selon la revendication 3, les capteurs de débit (34) étant réalisés sous la forme d'un bloc regroupé en une unité.

5. Tête de dosage selon l'une des revendications 1 à 4, la tête de dosage comprenant un support pour le logement de liquides et plus particulièrement de réactifs de détection comme des conduites de réactifs secondaires et/ou tertiaires, le support comprenant de préférence des soupapes de dosage et/ou un dispositif de contrôle de dosage.

6. Tête de dosage selon l'une des revendications 1 à 5, une ou plusieurs têtes de dosage (30) étant conçues de façon à ce qu'elles puissent être insérées de manière amovible dans un support de tête de dosage (40) du dispositif automatique (10) de dosage de réactifs sur une pluralité de supports d'objets (50).

7. Tête de dosage selon l'une des revendications 1 à 6, la tête de dosage comprenant un dispositif de lecture d'éléments d'identification apposés sur les supports d'objets (50).

8. Dispositif de coloration automatique (10) pour des examens en série dans le domaine de la santé, pour le dosage de réactifs sur une pluralité de supports d'objets (50), comprenant des dispositifs de maintien pour une pluralité de supports d'objets (50) qui comprennent chacun une pluralité de creux (52) délimités les uns par rapport aux autres, qui permettent de loger des échantillons de cellules ou de tissus (53),
une tête de dosage (30) selon l'une des revendications 1 à 7, avec une pluralité de réservoirs (31), permettant de loger des réactifs liquides et qui comprennent, au niveau de l'extrémité orientée vers les creux (52), une soupape de dosage (33) pour le dosage et l'application des réactifs dans les creux (52), et
un dispositif de positionnement (14) pour le positionnement des réservoirs (31) de la tête de dosage (30) au-dessus des creux (52) correspondants des supports d'objets (50).

9. Dispositif selon la revendication 8, les supports d'objets (50) étant disposés de manière amovible sur une ou plusieurs tablettes (51).

10. Dispositif selon la revendication 8 ou 9, les tablettes (51) pouvant être insérées de manière amovible dans le dispositif (10).

11. Dispositif selon l'une des revendications 8 à 10, les réservoirs (31) étant dimensionnés de façon à ce qu'au moins trois, de préférence six creux (52) adjacents puissent être alimentés simultanément en réactifs de détection par les réservoirs (31).

12. Dispositif selon l'une des revendications 8 à 11, la sortie des soupapes de dosage (33) étant disposée au-dessus des trous d'une plaque perforée.

13. Dispositif selon l'une des revendications 8 à 12, la tête de dosage (30) comprenant des capteurs de débit (34) pour la mesure du volume des réactifs dosés.

14. Dispositif selon l'une des revendications 8 à 13, le dispositif (10) comprenant un support de tête de dosage (40) dans lequel une ou plusieurs têtes de dosage (30) peuvent être insérées.

15. Dispositif selon l'une des revendications 8 à 14, le dispositif (10) comprenant un bac de rinçage pour la collecte d'un liquide de rinçage, disposé en dessous des supports d'objets (50).

16. Dispositif selon l'une des revendications 8 à 15, un support d'objets (50) pouvant être transféré, seul ou avec d'autres supports d'objets (50), d'une première position, permettant l'introduction des réactifs dans le creux (52), vers une deuxième position située dans le bac de rinçage.

17. Dispositif selon la revendication 16, la tablette (51) contenant les supports d'objets pouvant être transférée, seule ou avec d'autres tablettes (51), d'une première position permettant de la réalisation des réactions de détection, vers une deuxième position située dans le bac de rinçage.

18. Dispositif selon l'une des revendications 8 à 17, le dispositif (10) comprenant une station de remplissage, de préférence automatique, dans laquelle la tête de dosage (30) peut être déplacée, avec les réservoirs (31) entièrement ou partiellement vidés, à l'aide du dispositif de positionnement (14), afin de remplir les réservoirs (31) avec les réactifs correspondants.

19. Procédé de dosage de réactifs sur une pluralité de supports d'objets (50) un dispositif de coloration automatique (10), selon l'une des revendications 8 à 18, étant utilisé pour des examens en série dans le domaine de la santé, dans lequel
les supports d'objets (50) sont insérés dans le dispositif (10),
les réservoirs (31), qui forment un bloc regroupé en une unité et qui comprennent, à l'extrémité opposée aux soupapes de dosage (33), le couvercle étanche aux gaz (32), le couvercle (32) comprenant un raccord muni d'une soupape d'admission pour l'application d'une surpression de gaz, sont remplis de réactifs,
la tête de dosage (30) positionne, à l'aide du dispositif de positionnement (14), des réservoirs (31) adjacents entre eux au-dessus d'au moins trois creux (52) adjacents du support d'objet (50), et
les réactifs sont dosés dans les creux (52), le volume du réactif étant inférieur au volume du creux (52), au moins trois creux (52) adjacents des supports d'objets (52) étant alimentés simultanément en réactifs par des réservoirs (31).

20. Procédé selon la revendication 19, dans lequel les supports d'objets (52) sont identifiés par des éléments d'identification et la tête de dosage (30) ou le support de tête de dosage (40) du dispositif comprend un appareil de lecture des éléments d'identification, la tête de dosage (30) parcourant les supports d'objets (50) avant le début du dosage des réactifs afin de lire les informations sur les moyens d'identification et afin de d'enregistrer la position des supports d'objets (50) et des creux (52) présents sur les supports d'objets (50).
